# EUROPEAN PATENT APPLICATION

(11) **EP 3 799 268 A1**
(43) Date of publication of application: **31.03.2021**
(21) Application number: 19199903.6
(22) Date of filing: 26.09.2019
(51) Int. Cl.: H02K 5/10, H02K 5/14, H01R 39/38, H01R 39/08

(54) **ASSEMBLY FOR A ROTATING ELECTRIC MACHINE**

(71) Applicant: Mahle International GmbH, 70376 Stuttgart (DE)
(72) Inventor: COTAR MLAKAR, Janko, 5294 Dornberk (SI)
(74) Representative: BRP Renaud & Partner mbB Rechtsanwälte Patentanwälte Steuerberater

(57) **Abstract**

The present invention relates to an assembly (1) for a rotating electric machine (2), in particular for an alternator for a motor vehicle (3).

The invention is based on the general idea that at least one sealing member (13) is formed as a part of a brush holder (7).

## Description

The present invention relates to an assembly for a rotating electric machine, in particular for an alternator for a motor vehicle. The invention further relates to a protective housing and a brush holder for such an assembly. The invention further relates to a rotating electric machine comprising such an assembly.

Automotive alternators operate in harsh environmental conditions and are exposed to temperature shocks, vibrations, mud, water, dust, salt and other substances from the environment and can negatively affect the lifetime of brushes and/or slip rings. Thus, an adequate protection and sealing of slip rings and brushes is important.

EP 0 318 009 A2 discloses an automotive AC generator or alternator with a protective structure for fluid-tightly closing a brush unit and its associated components to thereby prevent water or oil from entering thereinto. The protective structure includes a brush holder for encasing brushes and a slip ring cover for covering slip rings. The brush holder and the cover are coupled to each other with axial recesses being engaged with associated projections. The thus coupled brush holder and slip ring cover are fixed while being pressed in the axial direction toward a rear frame of the alternator by a rear cover thereof with a seal member interposed between axial end faces of the brush holder and slip ring cover and the rear frame and with another seal member interposed between the other axial end faces of the brush holder and slip ring cover and the rear cover.

Similar alternators are discloses in US 8,193,682 B2 and US 2006/0273685 A1. Further alternators are disclosed in US 5,621,265 A, US 6,734,587 B2 and EP 0 669 695 B1. A brush holder and a protective ring which are formed in one piece are disclosed in US 6,750,585 B2, US 6,081,054 A and US 5,245,241 A.

The drawback of these generators is that the brush holder has to be assembled in an axial direction with respect to the slip ring cover. Another disadvantage is that two different gaskets are needed to seal the connection from the bottom and the top side with respect to the axial direction. Another disadvantage is that the connection between brush holder and slip ring cover is not watertight since projections of the slip ring cover have to slide into specially designed recesses of the brush holder which cannot seal the connection waterproof as there are always some tolerances necessary that enable parts to be assembled in a way that the projections can slide into the recesses.

Another disadvantage of these generators is that the brushes cannot be removed easily when they are worn out. In such a case, it is necessary to remove the alternator from the vehicle and to remove the protective cover from the rear side to access the brush holder. Then the screws have to be removed and then the brush holder can be removed in axial direction.

In a case of a brush holder and a protective ring which are formed in one piece, an additional drawback is an increased distance between the end of brush guides and slip rings since a removable tube has to be inserted in the brush holder to block brushes before an installation procedure. The increased distance leads to a worse guiding of the brushes, a shorter working length of the brush and a shorter lifetime of the brush.

US 6,812,604 B2, US 6,995,486 B2 and US 9,935,520 B2 disclose protective caps with air intake openings. US 4,419,597 A discloses a rear cover formed of metal, usually sheet iron.

US 7,554,232 B2 discloses a cover that covers the support of a phase connector, which is one piece with a brush-holder, which houses brushes up against said slip rings and with one brush-holder connector for linking the brushes to the electronic module containing an alternating current rectifying device of the coiled stator.

US 8,344,583 B2 discloses an automotive alternator having structure for preventing entry and discharging of foreign matters irrespective of a posture of a brush unit, to thereby allow normalization of the brush unit. The brush unit of the automotive alternator includes a slip ring, a brush, a brush holder, and a slip ring cover coaxially spaced from the slip ring and having an inner peripheral surface surrounding substantially an entire periphery of the slip ring. The inner peripheral surface of the slip ring cover has a tapered surface increasing in diameter from a first end on the frame side toward a second end having a fully-open opening. The fully-open opening is sealed by a sealing member that forms a labyrinth seal with the second end.

US 7,417,353 B2 discloses that a rear cover, a brush holder, and a sealing member have a ventilating passage for positively causing an flow of air from the inner space containing the slid portions of the brushes on the slip rings to an outside of the alternator.

The problem addressed by the present invention is to provide an improved embodiment or at least a different embodiment of an assembly for a rotating electric machine which is distinguished in particular by simplifying an installation or removal of the brush holder by means of less necessary work steps and in particular by simplifying an installation or removal of the brush holder by means of fewer individual and/or separate parts which have to be assembled.

This problem is solved according to the invention by the subject-matter of the independent claims. The dependent claims relate to advantageous embodiments.

The invention is based on the general idea that at least one sealing member is formed as a part of the brush holder.

The assembly for a rotating electric machine according to the invention, in particular for an alternator for a motor vehicle, comprises a rotor shaft with a longitudinal axis, a protective housing and a brush holder which at least partially form a protection chamber. The protective housing and the brush holder may form at least partially inner wall surfaces which at least partially enclose the protection chamber.

The protective housing is formed separately with respect to the brush holder. The rotor shaft may be formed separately with respect to the brush holder and/or with respect to the protective housing. The rotor shaft may be rotatable with respect to the brush holder and/or with respect to the protective housing.

The longitudinal axis of the rotor shaft may coincide with a symmetric axis of the rotor shaft. The longitudinal axis of the rotor shaft and/or the symmetric axis of the rotor shaft may coincide with a rotation axis. The rotor shaft may be rotatable around the longitudinal axis and/or the symmetric axis and/or the rotation axis. The rotor shaft may be rotatable around the longitudinal axis and/or the symmetric axis and/or the rotation axis with respect to the protective housing and/or with respect to the brush holder. The rotor shaft may be rotatably supported and/or rotatably mounted around the longitudinal axis and/or the symmetric axis and/or the rotation axis.

The rotor shaft is at least partially arranged in the protection chamber. In particular, a rear end of the rotor shaft may be at least partially arranged in the protection chamber. The rear end of the rotor shaft may be a section of rotor shaft which may be arranged outside of a machine housing of the rotating electric machine and which may be arranged closer to a rear bracket of the machine housing than to a front bracket of the machine housing. The rotor shaft, in particular the rear end of the rotor shaft, may be arranged contact-free in the protection chamber with respect to the protective housing and/or with respect to the brush holder.

The protective housing comprises a sleeve body with at least one opening portion, wherein the opening portion is at least partially arranged opposite the rotor shaft with respect to a radial axis. The radial axis is substantially oriented transversely and/or perpendicular to the longitudinal axis. In particular, the radial axis may be oriented such that it penetrates the opening portion.

The sleeve body may be formed as a hollow cylindrical body, in particular as a substantially circular hollow cylindrical body. With the exception of the opening portion, the sleeve body and/or the hollow cylindrical body and/or the substantially circular hollow cylindrical body may have a substantially constant diameter, in particular substantially constant diameter with respect to the radial axis. The sleeve body may be formed separately with respect to the brush holder.

The sleeve body may form at least partially inner wall surfaces which at least partially enclose the protection chamber with respect to a circumferential direction of the rotor shaft around the longitudinal axis. The circumferential direction of the rotor shaft may extend in a plane which is substantially perpendicular and/or transverse to the longitudinal axis and may extend circumferentially around the longitudinal axis. The sleeve body and the rotor shaft may be substantially arranged coaxially with respect to the longitudinal axis. The sleeve body may form an axial opening and an axial end plate which are spaced apart from each other with respect to the longitudinal axis. The axial opening may be penetrated by the rotor shaft. The axial end plate may be completely closed. The axial end plate may form at least partially an inner wall surface, in particular an axial inner wall surface, which at least partially enclose the protection chamber. The axial end plate and the rotor shaft may be spaced apart from each other with respect to the longitudinal axis. The axial end plate may be arranged opposite the rotor shaft with respect to the longitudinal axis. The hollow cylindrical body, in particular the substantially circular hollow cylindrical body, of the sleeve body and the axial end plate of the sleeve body may be formed as a single-piece and/or as a one-piece. The protective housing may be formed pot-like.

The brush holder is at least partially inserted in the opening portion. In particular, a brush holder head of the brush holder is at least partially inserted in the opening portion. The brush holder, in particular the brush holder head, may be insertable in the opening portion along the radial axis. The brush holder, in particular the brush holder head, may be removable from the opening portion along the radial axis.

The brush holder, in particular the brush holder head, comprises a sealing surface section and at least one sealing member, wherein the protective housing comprises a counter sealing surface section which is at least partially arranged opposite sealing surface section of the brush holder with respect to the radial axis. The sealing surface section and the counter sealing surface section may be spaced from each other, in particular spaced from each other with respect to the radial axis.

The at least one sealing member is arranged between the sealing surface section and the counter sealing surface section with respect to the radial axis for a fluid-tight sealing, in particular for an air-tight and/or for a water-tight and/or for a liquid-tight sealing.

The at least one sealing member of the brush holder is contacting the counter sealing surface section of the protective housing, wherein the at least one sealing member is connected to the sealing surface section of the brush holder in a materially bonded manner. The term contact can be defined as an indirect and/or direct mechanical contact between the counter sealing surface section and the at least one sealing member. The contacting may be formed as a loose contacting, such that the contacting is releasable without damage to the counter sealing surface section or the at least one sealing member. With other words, the contact between the counter sealing surface section and the at least one sealing member may be cancelled if the counter sealing surface section or the at least one sealing member being separated by a displacement of each other.

The at least one sealing member of the brush holder may be pressed against the counter sealing surface section of the protective housing in such a way, that the at least one sealing member is at least partially elastically deformed. The at least one sealing member may be made from elastic material like for example rubber, silicone rubber or other materials that can be used as sealants. The at least one sealing member may be formed by applying molten material, in particular molten elastic material, on at least one surface of the brush holder, in particular on sealing surface section of the brush holder. The at least one sealing member may form a sealing bead and/or sealing line. Such a sealing bead and/or sealing line may extend parallel to at least one sealing surface section. Such a sealing bead and/or sealing line may have a non-linear and/or curvilinear extension on at least one sealing surface of the sealing surface section. Such a sealing bead and/or sealing line may have a substantially linear extension on at least one sealing surface of the sealing surface section.

The at least one sealing member and the brush holder may be formed from different materials. The brush holder may be formed from insulating material and/or thermoplastic material and/or reinforced thermoplastic material and/or fiber reinforced thermoplastic material. The at least one sealing member may be formed from insulating material and/or thermoplastic material and/or thermoplastic elastomer material. The protective housing may be formed from insulating material and/or thermoplastic material and/or reinforced thermoplastic material and/or fiber reinforced thermoplastic material.

The protective housing may be a part of a rectifier insulating plate and/or integrally formed by a rectifier insulating plate. The protective housing may be formed separately with respect to a rectifier insulating plate. The protective housing may be a part of the rear bracket. The protective housing may form a foot section. The foot section may encircle the axial opening and/or the rotor shaft collar-like. The foot section may be spaced apart from the axial end plate with respect to the longitudinal axis. The foot section may form at least or more fastening struts.

The brush holder may comprise two or more separate sealing members, wherein the members may be arranged between the sealing surface section and the counter sealing surface section for a fluid-tight sealing, in particular for an air-tight and/or for a water-tight and/or for a liquid-tight sealing. The sealing members may be spaced apart from each other. The two or more sealing members may be substantially formed like the at least one sealing member.

At least one sealing surface of the sealing surface section and at least one counter sealing surface of the counter sealing surface which are facing each other, in particular facing each other with respect to their surface normal vector, may be oriented and/or arranged substantially parallel to each other.

Since the at least one sealing member is formed as a part of the brush holder, there is no need for a separate sealing member or gasket. Compared to a separate sealing member or gasket, the at least one sealing member of the inventive brush holder can be inserted or removed without additional work steps during an assembly process. Additionally, this invention enables to inspect the condition of the at least one sealing member when the brush holder is dismounted from the assembly for a rotating electric machine and/or from the rotating electric machine since the at least one sealing member is a part of the brush holder.

The at least one sealing member may provide a fluid-tight sealing, in particular for an air-tight and/or for a water-tight and/or for a liquid-tight sealing, of a gap between the sealing surface section and the counter sealing surface section such that a fluid, in particular air, water and/or liquid, cannot flow from the protection chamber to an environment of the assembly along the gap between the sealing surface section and the counter sealing surface section or vice versa.

In an advantageous embodiment of the solution according to the invention, the brush holder comprises at least two separate sealing members, wherein the at least two sealing members are arranged between the sealing surface section and the counter sealing surface section for a fluid-tight sealing, in particular for an air-tight and/or for a water-tight and/or for a liquid-tight sealing. The at least two sealing members are spaced apart from each other with respect to a longitudinal axis of the brush holder, wherein the longitudinal axis of the brush holder is substantially oriented parallel to the radial axis and/or substantially coincides with the radial axis, when the brush holder is at least partially inserted in the opening portion such that a fluid-tight sealing is formed.

The at least two sealing members of the brush holder are contacting the counter sealing surface section of the protective housing, wherein the at least two sealing members are connected to the sealing surface section of the brush holder in a materially bonded manner.

The at least two sealing members may form a double sealing, in particular a double sealing with respect to the radial axis. Such a redundant configuration ensures sufficient sealing even in the case of a damage of one sealing member.

In an advantageous embodiment of the solution according to the invention, the counter sealing surface section is formed completely circumferentially with respect to a circumferential direction of the opening portion. The circumferential direction of the opening portion may extend in a plane which is substantially perpendicular and/or transverse to the radial axis and may extend circumferentially around the radial axis.

The sealing surface section is formed completely circumferentially with respect to a circumferential direction of the brush holder. The circumferential direction of the brush holder may extend in a plane which is substantially perpendicular and/or transverse to the longitudinal axis of the brush holder and may extend circumferentially around the longitudinal axis of the brush holder.

The circumferential direction of the brush holder substantially coincides with the circumferential direction of the opening portion, when the brush holder is at least partially inserted in the opening portion such that a fluid-tight sealing is formed.

At least one sealing member is formed completely circumferentially with respect to the circumferential direction of the brush holder. At least two or more sealing members may be formed completely circumferentially with respect to the circumferential direction of the brush holder.

In a front view of the sealing surface section of the brush holder, the at least one sealing member may form a closed ring-like shape. In a front view of the sealing surface section of the brush holder, the at least one sealing member may form a closed ring-like shape which runs and/or extends continuously along the sealing surface section, in particular along all sealing surfaces of the sealing surface section. Parts of the at least one sealing member that form closed rings may be positioned parallel to mating surfaces or they may be made in some other shape forming a closed ring around the sealing surface section.

In an advantageous embodiment of the solution according to the invention, at least one sealing member is intermaterial-free connected to the sealing surface section of the brush in a materially bonded manner, and/or that at least one sealing member is connected to the sealing surface section of the brush holder in a materially bonded and form-fitting manner, and/or that at least one sealing member is intermaterial-free connected to the sealing surface section of the brush holder in a materially bonded and form-fitting manner.

For a form-fit connection, the sealing surface section may form a groove-like section into which at least one sealing member is arranged. At least one sealing member may be connected to the groove-like section in a materially bonded manner.

An intermaterial-free connection may by defined such that the at least one sealing member is connected to the sealing surface section without an intermaterial, like for example an adhesive. In other words, this can be expressed in such a way that the material of the at least one sealing member is directly bonded in a materially manner to the material of the sealing surface section.

In an advantageous embodiment of the solution according to the invention, the sealing surface section of the brush holder comprises at least one groove, in particular at least one groove which is formed completely circumferentially with respect to the circumferential direction of the brush holder, wherein at least one sealing member is at least partially connected, in particular intermaterial-free connected, to the at least one groove in a materially bonded manner. The groove may be formed as ring groove.

The sealing surface section may form two or more groove being spaced apart from each other with respect to a longitudinal axis of the brush holder. The brush holder may comprises two or more sealing members wherein each sealing member is at least partially connected, in particular intermaterial-free connected, to one associated groove in a materially bonded manner.

A groove provides an anchoring of at least one sealing member on the sealing surface section resulting in improved mechanical robustness.

In an advantageous embodiment of the solution according to the invention, the opening portion forms a guiding recess for positioning the brush holder with respect to the protective housing, wherein boundary walls of the guiding recess are at least partially formed by the counter sealing surface section. The guiding recess comprises a cross-sectional area perpendicular to the radial axis which increases with increasing distance to the rotor shaft with respect to the radial axis. The cross-sectional area of the guiding recess perpendicular to the radial axis may increase linearly or non-linearly with increasing distance to the rotor shaft with respect to the radial axis. The guiding recess may extend between a radial inner opening of the opening portion and a radial outer opening of the opening portion, wherein the radial inner opening is arranged more closely to the rotor shaft than the radial outer opening with respect to the radial axis. The cross-sectional area of the guiding recess perpendicular to the radial axis may be minimal at the radial inner opening, wherein the cross-sectional area of the guiding recess perpendicular to the radial axis may be maximal at the radial outer opening. The guiding recess may forms a truncated pyramidal shape. The truncated pyramidal shape may have a rectangular base formed by the radial outer opening of the opening portion.

The brush holder forms brush holder head, wherein boundary walls of the brush holder head are at least partially formed by the sealing surface section, wherein the brush holder head comprises a cross-sectional area perpendicular to the longitudinal axis of the brush holder and/or to the radial axis which increases with increasing distance to a front face with respect to the longitudinal axis of the brush holder and/or to the radial axis, wherein the front face is at least partially arranged opposite the rotor shaft with respect to the radial axis. The cross-sectional area of the brush holder head perpendicular to the longitudinal axis of the brush holder may increase linearly or non-linearly with increasing distance to a front face with respect to the longitudinal axis of the brush holder. The front face may be formed as curved surface and/or concave curved surface. The cross-sectional area of the brush holder head perpendicular to the longitudinal axis of the brush holder may be minimal at the front face, while the cross-sectional area of the brush holder head perpendicular to the longitudinal axis of the brush holder may be maximal at a rear face of brush holder head. The rear face of the brush holder head may be spaced apart from the front face with respect to the longitudinal axis of the brush holder. The brush holder head may have a truncated pyramidal shape. The truncated pyramidal shape may have a rectangular base spaced from the front front face.

Since the counter sealing surface section and sealing surface section tend to lean against each other when the brush holder is inserted and pushed forward in radial axis towards the rotor shaft, it stops only when the sealing surface section of the brush holder and the counter sealing surface section of the protection housing face each other. This way the brush holder may be positioned and fixed with respect to the protection housing. Therefore the brush holder, in particular brushes of the brush holder, substantially cannot move or oscillate for example when an alternator is operating and all parts vibrate. Additionally, it is sealed since at least one sealing member can be pressed between surfaces of both meeting parts, in particular with respect to the radial axis.

In an advantageous embodiment of the solution according to the invention, the sealing surface section comprises at least four sealing surfaces, which are connected to each other with respect to the circumferential direction of the brush holder. The counter sealing surface section comprises at least four counter sealing surfaces, which are connected to each other with respect to the circumferential direction of the opening portion. This results in a simple and cost-effective production of the components.

In an advantageous embodiment of the solution according to the invention, the four sealing surfaces each are perpendicular and/or inclined with respect to the longitudinal axis of the brush holder. The four counter sealing surfaces each are perpendicular and/or inclined with respect to the radial axis.

At least one inclination angle between each of the four sealing surfaces and the longitudinal axis of the brush holder may be formed. All four sealing surfaces may be inclined with respect to the longitudinal axis by a substantially identical inclination angle. The inclination angle may be in the range of 90° to 20°, in particular in the range of 50° to 30°. In particular, the inclination angle may be substantially 45°.

At least one inclination angle between each four counter sealing surfaces and the radial axis may be formed. All four counter sealing surfaces may be inclined with respect to the radial axis by a substantially identical inclination angle. The inclination angle may be in the range of 90° to 20°, in particular in the range of 50° to 30°. In particular, the inclination angle may be substantially 45°.

The inclination angle of the counter sealing surfaces with respect to the radial axis may be substantially identical to the inclination angle of the sealing surfaces with respect to the longitudinal axis of the brush holder.

In an advantageous embodiment of the solution according to the invention, the protective housing and/or the brush holder and/or at least one sealing member is formed from an insulating material, and/or that at least one sealing member and the brush holder are formed from different materials, and/or that at least one sealing member is formed from a more elastic material than the brush holder and/or than the protective housing. At least one sealing member may be formed from a material having a Young's modulus value smaller than the Young's modulus value of the material of the brush holder and/or than the protective housing.

The brush holder may be formed from insulating material and/or thermoplastic material and/or reinforced thermoplastic material and/or fiber reinforced thermoplastic material. At least one sealing member may be formed from insulating material and/or thermoplastic material and/or thermoplastic elastomer material. At least one sealing member may be formed from elastic materials like rubber, silicone rubber or other materials that can be used as sealants. At least one sealing member may be formed from elastic materials like rubber, silicone rubber or other materials that can be used as sealants and which can be applied with injection moulding technology. The protective housing may be formed from insulating material and/or thermoplastic material and/or reinforced thermoplastic material and/or fiber reinforced thermoplastic material.

In an advantageous embodiment of the solution according to the invention, the protective housing and/or the brush holder and/or at least one sealing member is formed as an injection-moulded part, and/or that the brush holder and at least one sealing member are formed as a multi-material injection-moulded part.

The protective housing and/or the brush holder and/or at least one sealing member may be formed as an injection-moulded plastic part, and/or that the brush holder and at least one sealing member may be formed as a multi-material plastic injection-moulded part.

The protective housing and/or the brush holder and/or at least one sealing member may be formed as injection-moulded part by injection moulding. At least one sealing member may be injection moulded on the brush holder in a completely separate production stage.

The brush holder and at least one sealing member may be formed as an inseparable multi-material injection-moulded part. The brush holder and at least one sealing member may be formed as a multi-material injection-moulded part by multi-material injection moulding, in particular by multi-component injection moulding and/or multi-shot injection moulding and/or over moulding. The brush holder and at least one sealing member may be formed as a multi-material injection-moulded part by two components. This can be made for example with two components injection moulding known as 2K. At least one sealing member may be injection moulded across at least one groove of the sealing surface section of the brush holder.

At least one sealing member becomes an integral part of the brush holder providing an easier assembly process since there is no need to put additional gasket in place.

In an advantageous embodiment of the solution according to the invention, a first slip ring and a second slip ring are fixed to the rotor shaft, wherein the first slip ring and the second slip ring are arranged in the protection chamber. The first slip ring and the second slip ring may be spaced apart from each other with respect to the longitudinal axis. The first slip ring and the second slip ring may be fixed to the rotor shaft in a in a rotationally fixed manner.

The brush holder comprises a first brush and a second brush, wherein the brush holder is at least partially inserted in the opening portion such that the first brush contacts the first slip ring and the second brush contacts the second slip ring. In this case, contact may mean an electrically conducting contact. A part of the first brush and the second brush may be arranged in the protection chamber.

The brushes may be formed separate with respect to the brush holder. The brushes and the slips ring may be made of an electrically conductive material.

The brush holder may form a first brush guidance recess for guiding the first brush along the longitudinal axis of the brush holder. The brush holder may form a second brush guidance recess for guiding the second brush along the longitudinal axis of the brush holder. The first brush may be at least partially arranged in the first brush guidance recess wherein the first brush may be movable with respect to the longitudinal axis of the brush holder. The second brush may be at least partially arranged in the second brush guidance recess wherein the second brush may be movable with respect to the longitudinal axis of the brush holder.

The first brush and the second brush may be spaced apart from each other with respect to a height axis of the brush holder. The first brush guidance recess and the second brush guidance recess may be spaced apart from each other with respect to a height axis of the brush holder. The height axis of the brush holder is substantially oriented transversely and/or perpendicular to the longitudinal axis of the brush holder. When the brush holder is at least partially inserted in the opening portion such that a fluid-tight sealing is formed, the height axis of the brush holder may be substantially oriented parallel to the longitudinal axis of the rotor shaft.

The first brush guidance recess and the second brush guidance recess each may ends in an opening of the front face of the brush holder head. The first brush and the second brush may extend through these opening of the front face of the brush holder head.

The brush holder may form a brush holder body which is connected to the rear face of the brush holder head. The brush holder body may have a cross-sectional area perpendicular to the longitudinal axis of the brush holder and/or to the radial axis which is substantially constant along the longitudinal axis of the brush holder. The brush holder body may have a cross-sectional area perpendicular to the longitudinal axis of the brush holder which is smaller than the cross-sectional area perpendicular to the longitudinal axis of the rear face of the brush holder head. The first brush guidance recess and the second brush guidance recess each may extend through the brush holder body and through the brush holder head. The brush holder body and the brush holder head may be formed as a single-piece and/or one-piece. Each brush may be fixed to a brush spring which may be arranged in the respective brush guidance recess. Each brush may be fixed to an electrical connection line which may be arranged in the respective brush guidance recess.

The invention further relates to a brush holder for an assembly according to the invention. The brush holder comprises sealing surface section and at least one sealing member, wherein the at least one sealing member is connected to the sealing surface section of the brush holder in a materially bonded manner, wherein the brush holder is formed separately with respect to a protective housing of the assembly, wherein the brush holder is at least partially insertable in an opening portion of the protective housing of the assembly to form at least partially a protection chamber of the assembly, wherein the at least one sealing member is arrangeable between the sealing surface section and a counter sealing surface section of the protective housing of the assembly to form a fluid-tight sealing, in particular for an air-tight and/or for a water-tight and/or for a liquid-tight sealing.

The brush holder, in particular the brush holder head, may be insertable in the opening portion along the radial axis of the rotor shaft of the assembly. The brush holder, in particular the brush holder head, may be removable from the opening portion along the radial axis the radial axis of the rotor shaft of the assembly.

One or more of the preceding and/or following features, which relate to the brush holder, may be formed by the brush holder according to the invention either singly or in any combination.

The invention further relates to a protective housing for an assembly according to the invention. The protective housing comprises a sleeve body with at least one opening portion, wherein the sleeve body forms at least partially a protection chamber of the assembly, wherein a rotor shaft of the assembly with a longitudinal axis is at least partially arrangeable in the protection chamber, wherein the opening portion is at least partially arrangeable opposite a rotor shaft of the assembly with respect to a radial axis, wherein the protective housing is formed separately with respect to a brush holder of the assembly, wherein the brush holder of the assembly is at least partially insertable in the opening portion such that at least one sealing member of the brush holder contacts a counter sealing surface section of the protective housing to form a fluid-tight sealing, in particular for an air-tight and/or for a water-tight and/or for a liquid-tight sealing.

One or more of the preceding and/or following features, which relate to the protective housing, may be formed by the protective housing according to the invention either singly or in any combination.

The invention further relates to a rotating electric machine, in particular to an alternator for a motor vehicle. The alternator for a motor vehicle may be an externally excite alternator. The rotating electric machine comprises an assembly according to the invention and a machine housing comprising a front bracket and a rear bracket.

The front bracket may be formed as front bracket-shaped part of the machine housing. The rear bracket may be formed as rear bracket-shaped part of the machine housing. The front bracket may be formed separately with respect to the rear bracket.

The housing, in particular the front bracket and the rear bracket, forms an installation chamber, wherein a stator unit and a rotor unit are arranged in the installation chamber. The stator unit is at least partially arranged on the machine housing, in particular on the front bracket and/or on the rear bracket, wherein the rotor unit is fixed to the rotor shaft of the assembly in a rotationally fixed manner.

The stator unit may comprise a stator body and stator windings. The rotor unit may have rotor windings. The rotor unit may comprise a front claw body and a rear claw body which are mounted on the rotor shaft on both sides of the rotor windings, in such a way that pole claws of the front claw body and pole claws of the rear claw body alternate in the circumferential direction about the longitudinal axis of the rotor shaft and thus form electromagnetic poles which alternate with one another during the operation of the alternator.

The rotor shaft is rotatably supported about a rotation axis and the assembly according to the invention is arranged outside of the installation chamber. The rotor shaft may be rotatably mounted in a front bearing and in a rear bearing. The front bearing may be arranged to the front bracket, while the rear bearing may be arranged to the rear bracket.

The rear bearing and/or the front bearing may be formed fluid-tight, in particular air-tight and/or water-tight and/ liquid-tight. The rear bearing and/or the front bearing may be as rolling bearings, in particular as rolling bearings with a sealing disc.

A part of the rotor shaft which may be led out through the front bracket may define a front end part of the rotor shaft which is outside of the installation chamber. A part of the rotor shaft which may be led out through the rear bracket may define a rear end part of the rotor shaft which is outside of the installation chamber. Parts of the machine which are described by the term rear may be arranged closer to the rear end part of the rotor shaft than to the front end part of the rotor shaft with respect to the longitudinal axis of the rotor shaft. Parts of the machine which are described by the term front may be arranged closer to the front end part of the rotor shaft than to the rear end part of the rotor shaft with respect to the longitudinal axis of the rotor shaft.

The front end part of the rotor shaft may comprise a separate or integrally formed drive element which serves for transmission of torque between the rotor shaft and a drivetrain. In the case of the electric machine being used as an alternator on an internal combustion engine, the alternator may be expediently incorporated into a belt drive of the internal combustion engine, such that the drive element may be then a belt pulley which engages with a belt of the belt drive.

The rear end part of the rotor shaft may be arranged in the protective housing of the assembly according to the invention.

The rotating electric machine may comprise a rear fan and/or a front fan which may be fixed to the rotor shaft of the assembly in a rotationally fixed manner. The a rear fan and/or a front fan may be arranged in the installation chamber to convey an ambient airflow through the installation chamber to provide a cooling effect of the components inside the installation chamber. When a rotating electric machine is in operating, heat may be generated because of the electric current in the windings, in the rectifier and voltage regulator, and because of the friction in the bearings and slip rings. This heat may be dissipated and reduced with forced ambient air flow. The ambient air usually has a lower temperature than parts of the alternator; therefore it is used as a cooling media. Ambient air may be sucked in through the inlet openings and/or ventilations slits of the brackets in a longitudinal direction of the rotor shaft and may be pushed out in radial direction through outlet openings and/or ventilations slits of the brackets on the circumference of the brackets.

The rotating electric machine may comprise a rectifier unit and/or a voltage regulator unit. The voltage regulator unit may be arranged on the brush holder. Brushes of the brush holder may be pressed to slip rings of the rotor shaft to supply the rotor unit, in particular the rotor windings, with electric power, in particular with electric current. The brushes may be guided with guiding recesses that formed from insulating material and the brushes may be pressed by brush springs to the slip rings. The brushes may be connected to the voltage regulator unit by electrical connecting lines which may be welded and/or soldered and/or fixed to connections that lead to the voltage regulator unit. The brush holder may be fixed and/or may be fixable to the rear bracket and/or to the rectifier and/or to the voltage regulator carrier and/or to the protection cover. An axial sealing element may be arranged between the protective housing and the rear bracket. The brushes of the brush holder may be in continuous contact with rotating slip rings. So there may be a stationary part and a rotating part. The protection chamber, in which the brushes may contact the rotating slip rings, may be closed and may be sealed towards the environment by the invention in a way that dust, hard particles or liquids cannot enter and influence the lifetime of brushes and slip rings.

The rectifier unit may convert alternating current and/or alternating voltage to direct current and/or to direct voltage which can be used in vehicle.

In an advantageous embodiment of the solution according to the invention, the assembly is at least partially covered by a protection cover, wherein the assembly is arranged between the rear bracket and the protection cover with respect to the rotation axis and/or longitudinal axis of the rotor shaft.

The protection cover assembly for a rotating electric machine, in particular for an alternator for a motor vehicle, comprises a protection cover having a shell body and an axial end plate which at least partially form a shield chamber. The shell body forms a machine end face adapted for arranging the protection cover on the rotating electric machine, wherein the axial end plate is arranged at a distance from the machine end face with respect to an axial axis of the protection cover.

The axial axis of the protection cover may be substantially perpendicular and/or transverse to the axial end plate. The machine end face may form an axial opening. The axial opening of the machine end face may be at least partially closed by a portion of the rotating electric machine, in particular by a portion of a rear bracket of the rotating electric machine.

The protection cover may be formed from insulating material and/or thermoplastic material and/or reinforced thermoplastic material and/or fiber reinforced thermoplastic material. The protection cover may be formed as an injection-moulded plastic part.

The protection cover assembly comprises a brush holder with at least one brush. The brush holder may be arranged at least partially in the shield chamber. The protection cover may be formed separately with respect to the brush holder.

The shell body comprises at least one insertion opening for inserting the brush holder at least partially in the shield chamber along an insertion axis of the protection cover, wherein the insertion axis of the protection cover is substantially oriented transversely and/or perpendicular to the axial axis of the protection cover. In particular, the insertion axis may be oriented such that it penetrates the insertion opening.

The axial axis of the protection cover may be substantially parallel to a longitudinal axis of a rotor shaft of the rotating electric machine and/or the symmetric axis of the rotor shaft and/or to rotation axis of the rotor shaft. The insertion axis of the protection cover may be substantially parallel to a radial axis of the rotor shaft and/or of a protective housing.

The shell body may be formed as a hollow cylindrical body, in particular as a substantially circular hollow cylindrical body. The shell body and/or the hollow cylindrical body and/or the substantially circular hollow cylindrical body may have a substantially constant diameter, in particular substantially constant diameter with respect to the radial axis. The shell body may form at least partially inner wall surfaces which at least partially enclose shield chamber with respect to a circumferential direction of the protection cover around the axial axis. The circumferential direction of the protection cover may extend in a plane which is substantially perpendicular and/or transverse to the axial axis and may extend circumferentially around the axial axis.

The axial end plate of the protection cover may form at least partially an inner wall surface, in particular an axial inner wall surface, which at least partially enclose the shield chamber. The axial end plate of the protection cover may be arranged opposite the rotor shaft with respect to the longitudinal axis and/or axial axis. The axial end plate may be completely closed or partially closed. The axial end plate of the protection cover may have ventilation slits. The shell body plate may have ventilation slits.

The hollow cylindrical body, in particular the substantially circular hollow cylindrical body, of the shell body and the axial end plate of the shell body may be formed as a single-piece and/or as a one-piece. The protection cover may be formed pot-like.

At least two guiding ribs are arranged in the shield chamber for a guiding of the brush holder along the insertion axis, wherein the at least two guiding ribs are at least partially arranged on the axial end plate. The at least two guiding ribs may be formed, in particular integrally formed, by the protection cover. The at least two guiding ribs may be formed, in particular integrally formed, by the shell body of the protection cover and/or axial end plate of the protection cover. The at least two guiding ribs may be formed as uninterrupted wall sections with sliding surfaces and/or guide surfaces.

The at least two guiding ribs may merge with the shell body such that they at least partially enclose the insertion opening circumferentially.

The at least two guiding ribs are at least partially spaced apart from each other with respect to a transverse axis of the protection cover, wherein the transverse axis of the protection cover is substantially oriented transversely and/or perpendicular to the axial axis of the protection cover. The transverse axis of the protection cover is substantially oriented transversely and/or perpendicular to the insertion axis of the protection cover. The spacing between the at least two guiding ribs with respect to the transverse axis of the protection cover varies at least in sections along the insertion axis of the protection cover. In particular, the spacing between the sliding surfaces and/or guide surfaces of the at least two guiding ribs with respect to the transverse axis of the protection cover may vary at least in sections along the insertion axis of the protection cover. At least a part of the brush holder may be arranged between the at least two guiding ribs with respect to the transverse axis of the protection cover.

The at least two guiding ribs may form a funnel-like guiding channel in order to provide an easy insertion of the brush holder with at least one brush. The at least two guiding ribs may be formed to guide the brush holder with at least one brush in a way that they cannot damage the brush during the insertion of the brush holder. The inclination and dimensions of the at least two guiding ribs may be chosen that the at least one brush does not contact the at least two guiding ribs during the insertion of the brush holder.

The at least two guiding ribs may guide the brush holder with at least one brush during the insertion by directing the brush holder along the insertion axis, so that the brush holder with at least one brush can be pressed along the insertion axis until the brush holder's final position. In this position, a front face of the at least one brush of the brush holder may contact at least one slip ring. The brush may be pressed into a brush guidance recess of the brush holder, wherein a brush spring in the brush guidance recess may be provide a sufficient contacting force for contacting of the brush and the slip ring.

The at least two guiding ribs may guide the brush holder with at least one brush to a protective housing, in particular to an opening portion of the protective housing, which may be at least partially arranged in the shield chamber. An opening portion of the protective housing may be at least partially arranged opposite the insertion opening with respect to the insertion axis.

If a brush holder with a brush has to be replaced in the vehicle, without dismounting the protection cover, it is most likely that the operator has to do that without looking at the opening from close. Also the opening on the protection cover can be hard to reach because of all other parts that surround the alternator. Since the protection cover may provide a guiding channel for an easy insertion of the brush holder with at least one brush, the brush holder can be exchanged easily without dismounting the protection cover from the rotating electric machine, in particular the brush holder can be exchanged without dismounting the rotating electric machine from the vehicle. Additionally, due to the guiding channel formed by the at least two guiding ribs, the possibility to damage or breakage at least one brush during insertion process is reduced. Thus, the possibility is reduced that brushes hit or rub against some of the parts that are under the protection cover, for example parts of a rectifier unit, parts of a voltage regulator units, part of a protection housing and/or part of a rear bracket. Thus, it is prevented that brush surfaces, in particular a front face of a brush, getting damaged and/or it is prevented that a brush from getting broken avoiding a significantly reduced lifetime of the brush or even failure of the rotating electric machine.

The at least one sealing member may provide a fluid-tight sealing, in particular for an air-tight and/or for a water-tight and/or for a liquid-tight sealing, of a gap between the sealing surface section and the counter sealing surface section such that a fluid, in particular air, water and/or liquid, cannot flow from the protection chamber to an environment of the assembly along the gap between the sealing surface section and the counter sealing surface section or vice versa.

The protective housing may be formed separately with respect to the protection cover.

When the brush holder is fixed in its final position, the longitudinal axis of the rotor shaft and the axial axis of the protection cover may be oriented substantially parallel. When the brush holder is fixed in its final position, the radial axis and the insertion axis of the protection cover may be oriented substantially parallel. When the brush holder is fixed in its final position, the radial axis and the insertion axis of the protection cover and the longitudinal axis of the brush holder may be oriented substantially parallel. In the brush holder's final position, a front face of at least one brush of the brush holder may contact at least one slip ring.

The opening portion may be facing the insertion opening with respect to the radial axis and/or with respect to the insertion axis of the protection cover.

In an advantageous embodiment of the solution according to the invention, the spacing between the at least two guiding ribs with respect to the transverse axis of the protection cover decreases at least in sections along the insertion axis of the protection cover with increasing distance from the insertion opening, and/or the spacing between the at least two guiding ribs with respect to the transverse axis of the protection cover decreases nonlinearly and/or linearly at least in sections along the insertion axis of the protection cover with increasing distance from the insertion opening, and/or the spacing between the at least two guiding ribs with respect to the transverse axis of the protection cover is constant at least in sections along the insertion axis of the protection cover.

In an advantageous embodiment of the solution according to the invention, the at least one insertion opening is followed by a first section of guiding ribs with respect to the insertion axis of the protection cover, wherein the spacing between the at least two guiding ribs with respect to the transverse axis of the protection cover decreases nonlinearly in the first section along the insertion axis of the protection cover with increasing distance from the insertion opening. The first section may form a receiving section into which an end body of the brush holder may be arranged. The first section may be at least partially formed complementary to a portion of the end body of the brush holder.

The first section of guiding ribs is followed by a second section of guiding ribs with respect to the insertion axis of the protection cover, wherein the spacing between the at least two guiding ribs with respect to the transverse axis of the protection cover is constant in the second section along the insertion axis of the protection cover. In the second section, the spacing between the at least two guiding ribs with respect to the transverse axis may be greater than or equal to a transverse dimension and/or a transverse length of a spacer body of the brush holder with respect to a transverse axis of the brush holder. When the brush holder is at least partially inserted in the protection cover, the transverse axis of the brush holder may be substantially parallel to the transverse axis of the protection cover.

In the second section, the spacing between the at least two guiding ribs with respect to the transverse axis may be greater than a transverse dimension and/or a transverse length of a brush holder body of the brush holder with respect to the transverse axis of the brush holder. In the second section, the spacing between the at least two guiding ribs with respect to the transverse axis may be greater than a transverse dimension and/or a transverse length of a brush holder head of the brush holder with respect to the transverse axis of the brush holder.

The second section of guiding ribs is followed by a third section of guiding ribs with respect to the insertion axis of the protection cover, wherein the spacing between the at least two guiding ribs with respect to the transverse axis of the protection cover decreases nonlinearly and/or linearly in the third section along the insertion axis of the protection cover with increasing distance from the insertion opening. In the third section, the spacing between the at least two guiding ribs with respect to the transverse axis may be smaller than a transverse dimension and/or a transverse length of a spacer body of the brush holder with respect to the transverse axis of the brush holder. In the third section, the spacing between the at least two guiding ribs with respect to the transverse axis may be greater than a transverse dimension and/or a transverse length of a brush holder body of the brush holder with respect to the transverse axis of the brush holder.

In an advantageous embodiment of the solution according to the invention, the third section of guiding ribs is followed by a fourth section of guiding ribs with respect to the insertion axis of the protection cover, wherein the fourth section forms a receiving sleeve connecting the at least two guiding ribs with each other.

The receiving sleeve may be formed as a hollow cylindrical body, in particular as a substantially circular hollow cylindrical body. A protective housing may be at partially arranged in the receiving sleeve. An opening portion of the protective housing may be at least partially arranged opposite the insertion opening with respect to the insertion axis.

In an advantageous embodiment of the solution according to the invention, the protection cover forms a sliding surface which is at least partially enclosed by the at least two guiding ribs with respect to a circumferential direction of the protection cover, and/or the at least two guiding ribs have an extension length from a sliding surface of the protection cover with respect to the axial axis of the protection cover which is shorter than the distance between the sliding surface and the machine end side of the protection cover with respect to the axial axis of the protection cover. The extension length of the at least two guiding ribs may be equal. The extension length of the at least two guiding ribs may vary and/or may be constant in sections along the insertion axis. The extension length of the at least two guiding ribs may decrease nonlinearly and/or linearly in sections along the insertion axis of the protection cover with increasing distance from the insertion opening.

While the at least two guiding ribs may restrict the freedom of movement of the brush holder with respect to the transverse axis of the protection cover, the sliding surface enclosed by the at least two guiding ribs restrict the freedom of movement of the brush holder with respect to the axial axis in the direction of the protection cover. A restriction of the freedom of movement of the brush holder with respect to the axial axis in the direction of the rotating electric machine may be formed by a rear bracket portion of the rotating electric machine and/or by a the carrier for electronic components, in particular a voltage regulator carrier.

The extension length of the at least two guiding ribs towards the machine end side of the protection cover may provide a guiding for the brush holder with at least one brush in a way that they do not obstruct the brush during an insertion process.

The extension length may describe the distance between an end of at least one guiding rib that protrudes into the shield chamber and the sliding surface of the protection cover with respect to the axial axis of the protection cover.

In an advantageous embodiment of the solution according to the invention, the brush holder forms a sliding surface and/or a sliding edge for sliding on the sliding surface of the protection cover at least during an insertion of the brush holder in the shield chamber, and/or the at least two guiding ribs have an extension length from a sliding surface of the protection cover with respect to the axial axis of the protection cover which is equal or shorter than the distance between the sliding surface and a brush surface with respect to a height axis of the brush holder, and/or the at least two guiding ribs have an extension length from a sliding surface of the protection cover with respect to the axial axis of the protection cover which is equal or shorter than the distance between the sliding edge and the brush surface with respect to the height axis of the brush holder, and/or the height axis of the brush holder is substantially oriented transversely and/or perpendicular to a longitudinal axis of the brush holder.

When the brush holder is at least partially inserted in the protection cover, the height axis of the brush holder may be substantially parallel to the axial axis of the protection cover.

The brush surface may be a surface of at least one brush of the brush holder, which may have the shortest distance to sliding surface of the protection cover with respect to the axial axis of the protection cover and/or with respect to the height axis of the brush holder.

The extension length of the at least two guiding ribs towards the machine end side of the protection cover may provide a guiding for the brush holder with at least one brush in a way that they do not obstruct the brush during an insertion process.

In an advantageous embodiment of the solution according to the invention, the brush holder has a brush holder head forming a sliding edge for sliding on the sliding surface of the protection cover at least during insertion of the brush holder in the shield chamber, and/or the brush holder has a spacer body forming a sliding surface for sliding on the sliding surface of the protection cover at least during insertion of the brush holder in the shield chamber.

The brush holder head may comprise a cross-sectional area perpendicular to the longitudinal axis of the brush holder and/or to the radial axis which increases with increasing distance to a front face with respect to the longitudinal axis of the brush holder. The cross-sectional area of the brush holder head perpendicular to the longitudinal axis of the brush holder may increase linearly or non-linearly with increasing distance to a front face with respect to the longitudinal axis of the brush holder. The front face may be formed as a curved surface and/or a concave curved surface. The cross-sectional area of the brush holder head perpendicular to the longitudinal axis of the brush holder may be minimal at the front face, while the cross-sectional area of the brush holder head perpendicular to the longitudinal axis of the brush holder may be maximal at a rear face of brush holder head. The rear face of the brush holder head may be spaced apart from the front face with respect to the longitudinal axis of the brush holder. The brush holder head may have a truncated pyramidal shape. The truncated pyramidal shape may have a rectangular base spaced from the front front face. One edge of the rear face of brush holder head may form the sliding edge for sliding on the sliding surface of the protection cover at least during insertion of the brush holder in the shield chamber.

The spacer body of the brush holder may be spaced apart from the brush holder head, in particular from the rear face of brush holder head, with respect to the longitudinal axis of the brush holder. The spacer body of the brush holder and the brush holder head may be connected and/or interconnected by a brush holder body. The brush holder body may be connected to the rear face of the brush holder head. The brush holder body may have a cross-sectional area perpendicular to the longitudinal axis of the brush holder which is substantially constant along the longitudinal axis of the brush holder. The brush holder body may have a cross-sectional area perpendicular to the longitudinal axis of the brush holder which is smaller than the cross-sectional area perpendicular to the longitudinal axis of the rear face of the brush holder head. The spacer body may have a length extension with respect to the longitudinal axis of the brush holder which is shorter than a length extension of the brush holder body with respect to the longitudinal axis of the brush holder. The spacer body may have a length extension with respect to the height axis of the brush holder which is shorter than a length extension of the brush holder body with respect to the height axis of the brush holder. The spacer body may have a length extension with respect to a transverse axis of the brush holder which is greater than a length extension of the brush holder body with respect to the transvers axis of the brush holder. The spacer body may be formed at least partially on a surface of the brush holder body which may have the shortest distance to sliding surface of the protection cover with respect to the axial axis of the protection cover and/or with respect to the height axis of the brush holder. The spacer body may have a cross-sectional area perpendicular to the longitudinal axis of the brush holder which is substantially constant along the longitudinal axis of the brush holder.

A first brush guidance recess and a second brush guidance recess each may extend through the brush holder body and through the brush holder head, however, the brush guidance recesses may not extend through the spacer body. The spacer body, the brush holder head and the brush holder body may be formed as a single-piece and/or as a one-piece.

The brush holder head may form lateral sliding edges for sliding on the guiding ribs of the protection cover at least during insertion of the brush holder in the shield chamber. The spacer body may form a lateral sliding surface for sliding on the guiding ribs of the protection cover at least during insertion of the brush holder in the shield chamber. The lateral sliding edges and/or lateral sliding surfaces may be oriented at least partially transverse and/or perpendicular to the sliding edge and/or sliding surfaces for sliding on the sliding surface of the protection cover.

The brush holder head may form a sliding surface for sliding on the sliding surface of the protection cover at least during insertion of the brush holder in the shield chamber. The brush holder head may form lateral sliding surfaces for sliding on the guiding ribs of the protection cover at least during insertion of the brush holder in the shield chamber.

In an advantageous embodiment of the solution according to the invention, the brush holder is fixed in a final position in the shield chamber by the protection cover and/or by a voltage regulator unit carrier and/or by a rectifier unit and/or by a rear bracket, and/or the brush holder is fixed in a final position in the shield chamber with fixing it at the protection cover, and/or at a voltage regulator unit carrier, and/or at a rectifier unit, and/or at a rear bracket, and/or the protection cover is formed from thermoplastic material, in particular from reinforced thermoplastic material, wherein the protection cover comprises at least one metallic member for fixation the brush holder in a final position in the shield chamber, wherein the at least one metallic member is at least partially molded into the protection cover, and/or that the protection cover is formed from thermoplastic material, in particular from reinforced thermoplastic material, wherein the protection cover comprises at least one metallic member with a fixing hole, wherein the at least one metallic member is at least partially molded into the protection cover, wherein the protection cover is fixable to a rotating electric machine by fastening means, in particular by a screw, which is at least partially insertable through the fixing hole.

The brush holder may be fixed on the voltage regulator carrier as the brush holder may be electrically connected with voltage regulating unit (with at least one brush). The protection cover may serve for guiding the brush holder into the right place.

The end body of the brush holder may have fastening means in order to fix the brush holder in final position to the protection cover. The protection cover may have corresponding counter fastening means to the fasting means of the end body of the brush holder in order to fix the brush holder in final position to the protection cover.

In an advantageous embodiment of the solution according to the invention, the brush holder and a protective housing are at least partially arranged in the shield chamber.

The embodiment may comprise an assembly for a rotating electric machine, in particular for an alternator for a motor vehicle, having a rotor shaft with a longitudinal axis, a protective housing and a brush holder which at least partially form a protection chamber. The protective housing and the brush holder may form at least partially inner wall surfaces which at least partially enclose the protection chamber.

The protective housing is formed separately with respect to the brush holder. The rotor shaft may be formed separately with respect to the brush holder and/or with respect to the protective housing. The rotor shaft may be rotatable with respect to the brush holder and/or with respect to the protective housing.

The longitudinal axis of the rotor shaft may coincide with a symmetric axis of the rotor shaft. The longitudinal axis of the rotor shaft and/or the symmetric axis of the rotor shaft may coincide with a rotation axis. The rotor shaft may be rotatable around the longitudinal axis and/or the symmetric axis and/or the rotation axis. The rotor shaft may be rotatable around the longitudinal axis and/or the symmetric axis and/or the rotation axis with respect to the protective housing and/or with respect to the brush holder. The rotor shaft may be rotatably supported and/or rotatably mounted around the longitudinal axis and/or the symmetric axis and/or the rotation axis.

The rotor shaft is at least partially arranged in the protection chamber. In particular, a rear end of the rotor shaft may be at least partially arranged in the protection chamber. The rear end of the rotor shaft may be a section of rotor shaft which may be arranged outside of a machine housing of the rotating electric machine and which may be arranged closer to a rear bracket of the machine housing than to a front bracket of the machine housing. The rotor shaft, in particular the rear end of the rotor shaft, may be arranged contact-free in the protection chamber with respect to the protective housing and/or with respect to the brush holder.

The protective housing comprises a sleeve body with at least one opening portion, wherein the opening portion is at least partially arranged opposite the rotor shaft with respect to a radial axis. The radial axis is substantially oriented transversely and/or perpendicular to the longitudinal axis. In particular, the radial axis may be oriented such that it penetrates the opening portion.

The sleeve body may be formed as a hollow cylindrical body, in particular as a substantially circular hollow cylindrical body. With the exception of the opening portion, the sleeve body and/or the hollow cylindrical body and/or the substantially circular hollow cylindrical body may have a substantially constant diameter, in particular substantially constant diameter with respect to the radial axis. The sleeve body may be formed separately with respect to the brush holder.

The sleeve body may form at least partially inner wall surfaces which at least partially enclose the protection chamber with respect to a circumferential direction of the rotor shaft around the longitudinal axis. The circumferential direction of the rotor shaft may extend in a plane which is substantially perpendicular and/or transverse to the longitudinal axis and may extend circumferentially around the longitudinal axis. The sleeve body and the rotor shaft may be substantially arranged coaxially with respect to the longitudinal axis. The sleeve body may form an axial opening and an axial end plate which are spaced apart from each other with respect to the longitudinal axis. The axial opening may be penetrated by the rotor shaft. The axial end plate may be completely closed. The axial end plate may form at least partially an inner wall surface, in particular an axial inner wall surface, which at least partially enclose the protection chamber. The axial end plate and the rotor shaft may be spaced apart from each other with respect to the longitudinal axis. The axial end plate may be arranged opposite the rotor shaft with respect to the longitudinal axis. The hollow cylindrical body, in particular the substantially circular hollow cylindrical body, of the sleeve body and the axial end plate of the sleeve body may be formed as a single-piece and/or as a one-piece. The protective housing may be formed pot-like.

The brush holder is at least partially inserted in the opening portion. In particular, a brush holder head of the brush holder is at least partially inserted in the opening portion. The brush holder, in particular the brush holder head, may be insertable in the opening portion along the radial axis. The brush holder, in particular the brush holder head, may be removable from the opening portion along the radial axis.

The brush holder, in particular the brush holder head, comprises a sealing surface section and at least one sealing member, wherein the protective housing comprises a counter sealing surface section which is at least partially arranged opposite sealing surface section of the brush holder with respect to the radial axis. The sealing surface section and the counter sealing surface section may be spaced from each other, in particular spaced from each other with respect to the radial axis.

The at least one sealing member is arranged between the sealing surface section and the counter sealing surface section with respect to the radial axis for a fluid-tight sealing, in particular for an air-tight and/or for a water-tight and/or for a liquid-tight sealing.

The at least one sealing member of the brush holder is contacting the counter sealing surface section of the protective housing, wherein the at least one sealing member is connected to the sealing surface section of the brush holder in a materially bonded manner. The term contact can be defined as an indirect and/or direct mechanical contact between the counter sealing surface section and the at least one sealing member. The contacting may be formed as a loose contacting, such that the contacting is releasable without damage to the counter sealing surface section or the at least one sealing member. With other words, the contact between the counter sealing surface section and the at least one sealing member may be cancelled if the counter sealing surface section or the at least one sealing member being separated by a displacement of each other.

The at least one sealing member of the brush holder may be pressed against the counter sealing surface section of the protective housing in such a way, that the at least one sealing member is at least partially elastically deformed. The at least one sealing member may be made from elastic material like for example rubber, silicone rubber or other materials that can be used as sealants. The at least one sealing member may be formed by applying molten material, in particular molten elastic material, on at least one surface of the brush holder, in particular on sealing surface section of the brush holder. The at least one sealing member may form a sealing bead and/or sealing line. Such a sealing bead and/or sealing line may extend parallel to at least one sealing surface section. Such a sealing bead and/or sealing line may have a non-linear and/or curvilinear extension on at least one sealing surface of the sealing surface section. Such a sealing bead and/or sealing line may have a substantially linear extension on at least one sealing surface of the sealing surface section.

The at least one sealing member and the brush holder may be formed from different materials. The brush holder may be formed from insulating material and/or thermoplastic material and/or reinforced thermoplastic material and/or fiber reinforced thermoplastic material. The at least one sealing member may be formed from insulating material and/or thermoplastic material and/or thermoplastic elastomer material. The protective housing may be formed from insulating material and/or thermoplastic material and/or reinforced thermoplastic material and/or fiber reinforced thermoplastic material.

The protective housing may be a part of a rectifier insulating plate and/or integrally formed by a rectifier insulating plate. The protective housing may be formed separately with respect to a rectifier insulating plate. The protective housing may be a part of the rear bracket. The protective housing may form a foot section. The foot section may encircle the axial opening and/or the rotor shaft collar-like. The foot section may be spaced apart from the axial end plate with respect to the longitudinal axis. The foot section may form at least one or more fastening struts.

The brush holder may comprise two or more separate sealing members, wherein the members may be arranged between the sealing surface section and the counter sealing surface section for a fluid-tight sealing, in particular for an air-tight and/or for a water-tight and/or for a liquid-tight sealing. The sealing members may be spaced apart from each other. The two or more sealing members may be substantially formed like the at least one sealing member.

At least one sealing surface of the sealing surface section and at least one counter sealing surface of the counter sealing surface which are facing each other, in particular facing each other with respect to their surface normal vector, may be oriented and/or arranged substantially parallel to each other.

Since the at least one sealing member is formed as a part of the brush holder, there is no need for a separate sealing member or gasket. Compared to a separate sealing member or gasket, the at least one sealing member of the inventive brush holder can be inserted or removed without additional work steps during an assembly process. Additionally, this invention enables to inspect the condition of the at least one sealing member when the brush holder is dismounted from the assembly for a rotating electric machine and/or from the rotating electric machine since the at least one sealing member is a part of the brush holder.

The protective housing may be formed separately with respect to the protection cover.

When the brush holder is fixed in its final position, the longitudinal axis of the rotor shaft and the axial axis of the protection cover may be oriented substantially parallel. When the brush holder is fixed in its final position, the radial axis and the insertion axis of the protection cover may be oriented substantially parallel. When the brush holder is fixed in its final position, the radial axis and the insertion axis of the protection cover and the longitudinal axis of the brush holder may be oriented substantially parallel.

The opening portion may be facing the insertion opening with respect to the radial axis and/or with respect to the insertion axis of the protection cover.

In an advantageous embodiment of the solution according to the invention, the opening portion forms a guiding recess for positioning the brush holder with respect to the protective housing, wherein boundary walls of the guiding recess are at least partially formed by the counter sealing surface section. The guiding recess comprises a cross-sectional area perpendicular to the radial axis which increases with increasing distance to the rotor shaft with respect to the radial axis. The cross-sectional area of the guiding recess perpendicular to the radial axis may increase linearly or non-linearly with increasing distance to the rotor shaft with respect to the radial axis. The guiding recess may extend between a radial inner opening of the opening portion and a radial outer opening of the opening portion, wherein the radial inner opening is arranged more closely to the rotor shaft than the radial outer opening with respect to the radial axis. The cross-sectional area of the guiding recess perpendicular to the radial axis may be minimal at the radial inner opening, wherein the cross-sectional area of the guiding recess perpendicular to the radial axis may be maximal at the radial outer opening. The guiding recess may forms a truncated pyramidal shape. The truncated pyramidal shape may have a rectangular base formed by the radial outer opening of the opening portion.

The brush holder forms brush holder head, wherein boundary walls of the brush holder head are at least partially formed by the sealing surface section, wherein the brush holder head comprises a cross-sectional area perpendicular to the longitudinal axis of the brush holder and/or to the radial axis which increases with increasing distance to a front face with respect to the longitudinal axis of the brush holder and/or to the radial axis, wherein the front face is at least partially arranged opposite the rotor shaft with respect to the radial axis. The cross-sectional area of the brush holder head perpendicular to the longitudinal axis of the brush holder may increase linearly or non-linearly with increasing distance to a front face with respect to the longitudinal axis of the brush holder. The front face may be formed as curved surface and/or concave curved surface. The cross-sectional area of the brush holder head perpendicular to the longitudinal axis of the brush holder may be minimal at the front face, while the cross-sectional area of the brush holder head perpendicular to the longitudinal axis of the brush holder may be maximal at a rear face of brush holder head. The rear face of the brush holder head may be spaced apart from the front face with respect to the longitudinal axis of the brush holder. The brush holder head may have a truncated pyramidal shape. The truncated pyramidal shape may have a rectangular base spaced from the front front face.

Since the counter sealing surface section and sealing surface section tend to lean against each other when the brush holder is inserted and pushed forward in radial axis towards the rotor shaft, it stops only when the sealing surface section of the brush holder and the counter sealing surface section of the protection housing face each other. This way the brush holder may be positioned and fixed with respect to the protection housing. Therefore the brush holder, in particular brushes of the brush holder, substantially cannot move or oscillate for example when an alternator is operating and all parts vibrate. Additionally, it is sealed since at least one sealing member can be pressed between surfaces of both meeting parts, in particular with respect to the radial axis.

In an advantageous embodiment of the solution according to the invention, a first slip ring and a second slip ring are fixed to the rotor shaft, wherein the first slip ring and the second slip ring are arranged in the protection chamber. The first slip ring and the second slip ring may be spaced apart from each other with respect to the longitudinal axis. The first slip ring and the second slip ring may be fixed to the rotor shaft in a rotationally fixed manner.

The brush holder comprises a first brush and a second brush, wherein the brush holder is at least partially inserted in the opening portion such that the first brush contacts the first slip ring and the second brush contacts the second slip ring. In this case, contact may mean an electrically conducting contact. A part of the first brush and the second brush may be arranged in the protection chamber.

The brushes may be formed separate with respect to the brush holder. The brushes and the slips ring may be made of an electrically conductive material.

The brush holder may form a first brush guidance recess for guiding the first brush along the longitudinal axis of the brush holder. The brush holder may form a second brush guidance recess for guiding the second brush along the longitudinal axis of the brush holder. The first brush may be at least partially arranged in the first brush guidance recess wherein the first brush may be movable with respect to the longitudinal axis of the brush holder. The second brush may be at least partially arranged in the second brush guidance recess wherein the first brush may be movable with respect to the longitudinal axis of the brush holder.

The first brush and the second brush may be spaced apart from each other with respect to a height axis of the brush holder. The first brush guidance recess and the second brush guidance recess may be spaced apart from each other with respect to a height axis of the brush holder. The height axis of the brush holder is substantially oriented transversely and/or perpendicular to the longitudinal axis of the brush holder. When the brush holder is at least partially inserted in the opening portion such that a fluid-tight sealing is formed, the height axis of the brush holder may be substantially oriented parallel to the longitudinal axis of the rotor shaft.

The first brush guidance recess and the second brush guidance recess each may ends in an opening of the front face of the brush holder head. The first brush and the second brush may extend through these opening of the front face of the brush holder head.

The brush holder may form a brush holder body which is connected to the rear face of the brush holder head. The brush holder body may have a cross-sectional area perpendicular to the longitudinal axis of the brush holder and/or to the radial axis which is substantially constant along the longitudinal axis of the brush holder. The brush holder body may have a cross-sectional area perpendicular to the longitudinal axis of the brush holder which is smaller than the cross-sectional area perpendicular to the longitudinal axis of the rear face of the brush holder head. The first brush guidance recess and the second brush guidance recess each may extend through the brush holder body and through the brush holder head. The brush holder body and the brush holder head may be formed as a single-piece and/or one-piece. Each brush may be fixed to a brush spring which may be arranged in the respective brush guidance recess. Each brush may be fixed to an electrical connection line which may be arranged in the respective brush guidance recess.

The invention further relates to a protection cover assembly for a rotating electric machine, in particular for an alternator for a motor vehicle. The invention is based on the general idea that a brush holder is insertable or removable from the alternator along an insertion axis of the protection cover without removing the protection cover, wherein in the insertion axis is substantially perpendicular and/or transverse to an axial axis of the protection cover, wherein the protection cover comprises at least two guiding ribs for a guiding of the brush holder along the insertion axis, wherein the spacing between guiding ribs varies at least in sections along the insertion axis.

The invention further relates to protection cover for a protection cover assembly according to invention, comprising a shell body and an axial end plate which at least partially form a shield chamber, wherein the shell body forms a machine end face for arranging the protection cover on a rotating electric machine, wherein the axial end plate is arranged at a distance from the machine end face with respect to an axial axis of the protection cover, wherein the shell body comprises at least one insertion opening for inserting a brush holder of the protection cover assembly at least partially in the shield chamber along a insertion axis of the protection cover, wherein the insertion axis of the protection cover is substantially oriented transversely and/or perpendicular to the axial axis of the protection cover, wherein at least two guiding ribs are arranged in the shield chamber for a guiding of the brush holder along the insertion axis, wherein the at least two guiding ribs are at least partially arranged on the axial end plate, wherein the at least two guiding ribs are at least partially spaced apart from each other with respect to a transverse axis of the protection cover, wherein the transverse axis of the protection cover is substantially oriented transversely and/or perpendicular to the axial axis of the protection cover, wherein the transverse axis of the protection cover is substantially oriented transversely and/or perpendicular to the insertion axis of the protection cover, wherein the spacing between the at least two guiding ribs with respect to the transverse axis of the protection cover varies at least in sections along the insertion axis of the protection cover.

The axial axis of the protection cover may be substantially perpendicular and/or transverse to the axial end plate.

One or more of the preceding and/or following features, which relate to the protection cover, may be formed by the protection cover according to the invention either singly or in any combination.

The invention further relates to a brush holder for a protection cover assembly according to the invention, comprising at least one brush, wherein the brush holder is at least partially insertable in a shield chamber of a protection cover of the protection cover assembly through at least one insertion opening of a protection cover along an insertion axis of the protection cover, wherein the brush holder is guidable along the insertion axis by least two guiding ribs which are arranged in the shield chamber.

The axial axis of the protection cover may be substantially perpendicular and/or transverse to the axial end plate.

One or more of the preceding and/or following features, which relate to the brush holder, may be formed by the brush holder according to the invention either singly or in any combination.

In an advantageous embodiment of the solution according to the invention, the brush holder forms a sliding surface and/or a sliding edge for sliding on a sliding surface of the protection cover at least during an insertion of the brush holder in the shield chamber, and/or that the brush holder has a brush holder head forming a sliding edge for sliding on a sliding surface of the protection cover at least during an insertion of the brush holder in the shield chamber, and/or that the brush holder has a spacer body forming a sliding surface for sliding on a sliding surface of the protection cover at least during an insertion of the brush holder in the shield chamber.

One or more of the preceding and/or following features, which relate to the brush holder, may be formed by the brush holder according to the invention either singly or in any combination.

The invention further relates to a rotating electric machine, in particular to an alternator for a motor vehicle. The alternator for a motor vehicle may be an externally excite alternator. The rotating electric machine comprises a protection cover assembly according to the invention and a machine housing comprising a front bracket and a rear bracket.

The front bracket may be formed as front bracket-shaped part of the machine housing. The rear bracket may be formed as rear bracket-shaped part of the machine housing. The front bracket may be formed separately with respect to the rear bracket.

The housing, in particular the front bracket and the rear bracket, forms an installation chamber, wherein a stator unit and a rotor unit are arranged in the installation chamber. The stator unit is at least partially arranged on the machine housing, in particular on the front bracket and/or on the rear bracket, wherein the rotor unit is fixed to the rotor shaft of the assembly in a rotationally fixed manner.

The stator unit may comprise a stator body and stator windings. The rotor unit may have rotor windings. The rotor unit may comprise a front claw body and a rear claw body which are mounted on the rotor shaft on both sides of the rotor windings, in such a way that pole claws of the front claw body and pole claws of the rear claw body alternate in the circumferential direction about the longitudinal axis of the rotor shaft and thus form electromagnetic poles which alternate with one another during the operation of the alternator.

The rotor shaft is rotatably supported about a rotation axis and the protection cover assembly according to the invention is arranged outside of the installation chamber. The protection cover assembly is at least partially arranged opposite the rear bracket of the machine housing. The rotor shaft may be rotatably mounted in a front bearing and in a rear bearing. The front bearing may be arranged to the front bracket, while the rear bearing may be arranged to the rear bracket.

The rear bearing and/or the front bearing may be formed fluid-tight, in particular air-tight and/or water-tight and/ liquid-tight. The read bearing and/or the front bearing may be as rolling bearings, in particular as rolling bearings with a sealing disc.

A part of the rotor shaft may be led out through the front bracket may define a front end part of the rotor shaft which is outside of the installation chamber. A part of the rotor shaft may be led out through the rear bracket may define a rear end part of the rotor shaft which is outside of the installation chamber. Parts of the machine which are described by the term rear may be arranged closer to the rear end part of the rotor shaft than to the front end part of the rotor shaft with respect to the longitudinal axis of the rotor shaft. Parts of the machine which are described by the term front may be arranged closer to the front end part of the rotor shaft than to the rear end part of the rotor shaft with respect to the longitudinal axis of the rotor shaft.

The front end part of the rotor shaft may comprise a separate or integrally formed drive element which serves for transmission of torque between the rotor shaft and a drivetrain. In the case of the electric machine being used as an alternator on an internal combustion engine, the alternator may be expediently incorporated into a belt drive of the internal combustion engine, such that the drive element may be then a belt pulley which engages with a belt of the belt drive.

The rear end part of the rotor shaft may be arranged in a protective housing of the protective cover assembly according to the invention. The protective housing may be at least partially covered by a protection cover, wherein the protective housing may be arranged between the rear bracket and the protection cover with respect to the rotation axis and/or longitudinal axis of the rotor shaft.

The rotating electric machine may comprise a rear fan and/or a front fan which may be fixed to the rotor shaft of the assembly in a rotationally fixed manner. The a rear fan and/or a front fan may be arranged in the installation chamber to convey an ambient airflow through the installation chamber to provide a cooling effect of the components inside the installation chamber. When a rotating electric machine is in operating, heat may be generated because of the electric current in the windings, in the rectifier and voltage regulator, and because of the friction in the bearings and slip rings. This heat may be dissipated and reduced with forced ambient air flow. The ambient air usually has a lower temperature than parts of the alternator; therefore it is used as a cooling media. Ambient air may be sucked in through the inlet openings and/or ventilations slits of the brackets in a longitudinal direction of the rotor shaft and may be pushed out in radial direction through outlet openings and/or ventilations slits of the brackets on the circumference of the brackets.

The rotating electric machine may comprise a rectifier unit and/or a voltage regulator unit. The voltage regulator unit may be arranged on the brush holder. Brushes of the brush holder may be pressed to slip rings of the rotor shaft to supply the rotor unit, in particular the rotor windings, with electric power, in particular with electric current. The brushes may be guided with guiding recesses that formed from insulating material and the brushes may be pressed by brush springs to the slip rings. The brushes may be connected to the voltage regulator unit by electrical connecting lines which may be welded and/or soldered and/or fixed to connections that lead to the voltage regulator unit. The brush holder may be fixed and/or may be fixable to the rear bracket and/or to the rectifier and/or to the voltage regulator carrier and/or to the protection cover. An axial sealing element may be arranged between the protective housing and the rear bracket. The brushes of the brush holder may be in continuous contact with rotating slip rings. So there may be a stationary part and a rotating part. The protection chamber, in which the brushes may contact the rotating slip rings, may be closed and may be sealed towards the environment by the invention in a way that dust, hard particles or liquids cannot enter and influence the lifetime of brushes and slip rings.

The rectifier unit may convert alternating current and/or alternating voltage to direct current and/or to direct voltage which can be used in vehicle.

Additional important features and advantages of the invention will be appreciated from the dependent claims, the drawings and the associated description of the Figures with reference to the drawings.

It will be understood that the above-mentioned features and those which will be explained below may be used not only in the combination set out but also in other combinations or alone, without departing from the scope of the present invention.

Preferred embodiments of the invention are illustrated in the drawings and are explained in greater detail in the following description, wherein the same reference numerals refer to the same or similar or functionally identical components.

In the schematic drawings:
- Fig. 1: is a cross-section of a protective housing with an opening portion and a rotor shaft, wherein the rotor shaft is partially arranged in the protective housing,
- Fig. 2: is a front view on the opening portion of the protective housing of Fig. 1,
- Fig. 3: is a perspectival view on the protective housing of Fig. 1 and Fig. 2,
- Fig. 4: is a perspectival view on a brush holder with a brush holder head, brush holder body and a spacer body,
- Fig. 5: is a front view on the brush holder head of the brush holder of Fig. 4,
- Fig. 6: is a perspective view on a brush holder with a brush holder head, brush holder body and a spacer body, wherein the brush holder head comprises at least one sealing member,
- Fig. 7: is a front view on the brush holder head of the brush holder of Fig. 6,
- Fig. 8: is side view and a partial cross-section of the brush holder of Fig. 6 and 7,
- Fig. 9: is a side view of an assembly for a rotating electric machine before an assembling process,
- Fig. 10: is a side view of the assembly for a rotating electric machine after an assembling process,
- Fig. 11: is a side view of a further embodiment of the assembly for a rotating electric machine after an assembling process,
- Fig. 12: is a perspective view on protection cover with guiding ribs,
- Fig. 13: is a perspective view on a further embodiment of a protection cover with guiding ribs,
- Fig. 14: is a cross-section of a part of a protection cover with guiding ribs,
- Fig. 15: is a top view of a protection cover assembly for a rotating electric machine before an assembling process,
- Fig. 16: is a top view of a protection cover assembly for a rotating electric machine during an assembling process,
- Fig. 17: is a top view of a protection cover assembly for a rotating electric machine during an assembling process,
- Fig. 18: is a top view of a protection cover assembly for a rotating electric machine after an assembling process,
- Fig. 19: is a side view of a protection cover assembly for a rotating electric machine after an assembling process,
- Fig. 20: is a side view of a further embodiment of a protection cover assembly for a rotating electric machine after an assembling process,
- Fig. 21: is a schematic view of a rotating electric machine,
- Fig. 22: is a schematic view of a rotating electric machine in a motor vehicle.

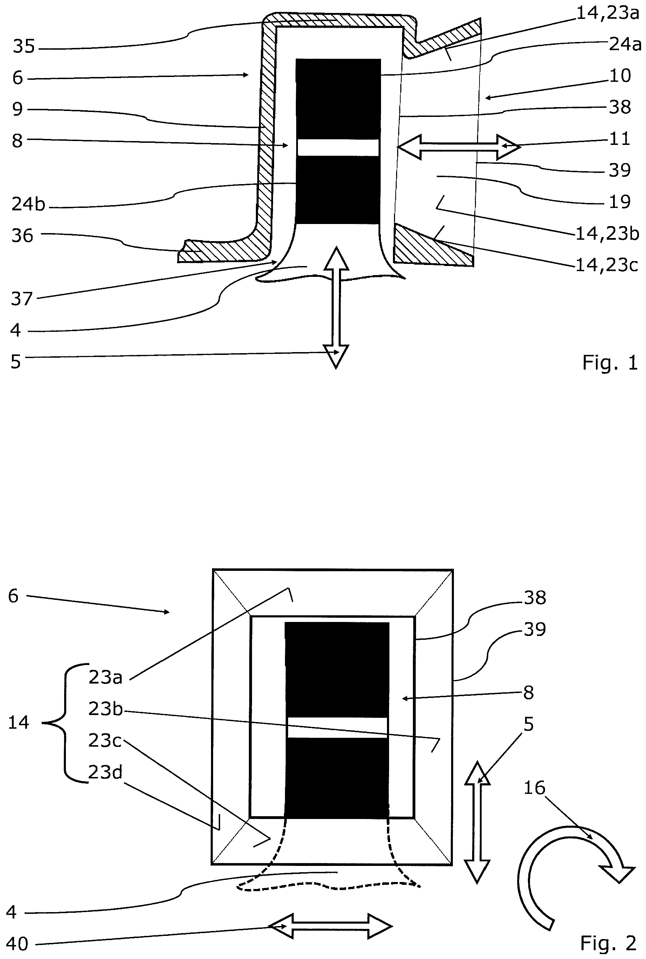

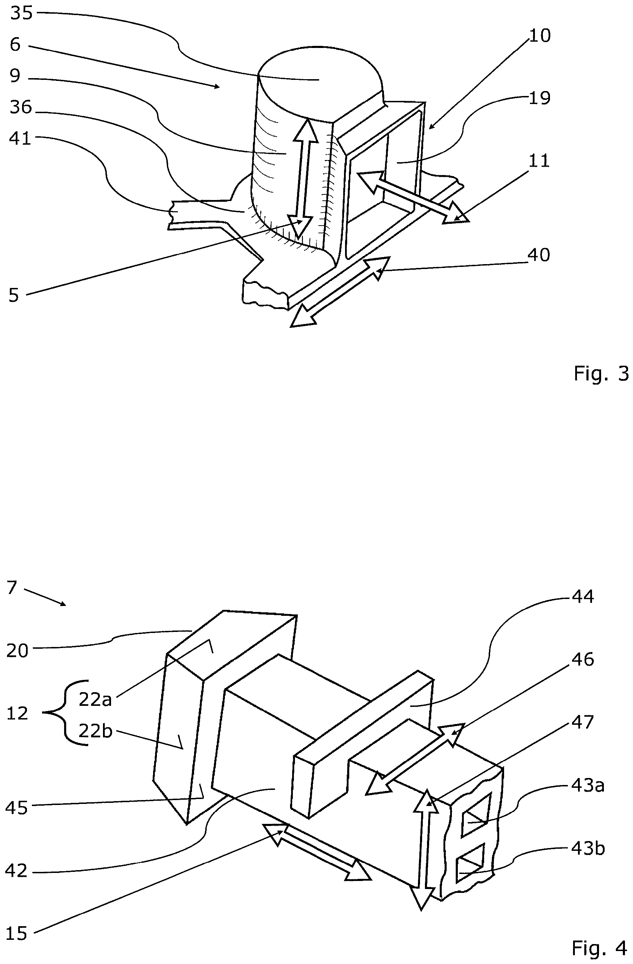

Fig. 1 shows a cross-section of a protective housing 6 with an opening portion 10 and a rotor shaft 4, wherein the rotor shaft 4 is partially arranged in the protective housing 6. Fig. 2 shows a front view on the opening portion of the protective housing of Fig.1. Fig. 3 shows a perspectival view on protective housing of Fig. 1 and Fig. 2,

The protective housing 6 forms at least partially inner wall surfaces which at least partially enclose the protection chamber 8. The protective housing 6 is formed separately with respect to the brush holder 7 which is for example shown in Fig. 4 to 11 and 15 to 22. The rotor shaft 4 is formed separately with respect to the brush holder 7 and/or with respect to the protective housing 6. The rotor shaft 4 is rotatable with respect to the brush holder 7 and/or with respect to the protective housing 6.

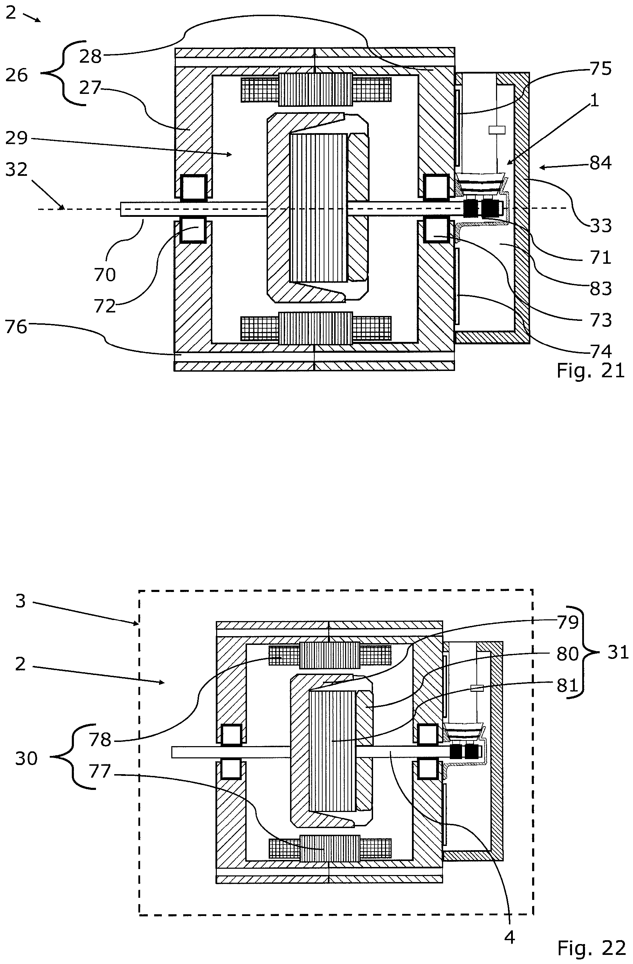

The rotor shaft 4 has a longitudinal axis 5 that may coincide with a not shown symmetric axis of the rotor shaft 5. The longitudinal axis 5 of the rotor shaft 4 and/or the symmetric axis of the rotor shaft may coincide with a rotation axis 32 which is shown in Fig. 21. The rotor shaft 4 is rotatable around the longitudinal axis 5 and/or the symmetric axis and/or the rotation axis 32.

A first slip ring 24a and a second slip ring 24b are fixed to the rotor shaft 4, wherein the first slip ring 24a and the second slip ring 24b are arranged in the protection chamber 8. The first slip ring 24a and the second slip ring 24b are spaced apart from each other with respect to the longitudinal axis 5. The first slip ring 24a and the second slip ring 24b are fixed to the rotor shaft in a in a rotationally fixed manner.

The rotor shaft 4 is at least partially arranged in the protection chamber 8. In particular, a rear end 71 of the rotor shaft 4 may be at least partially arranged in the protection chamber 8. The rotor shaft 4, in particular the rear end 71 of the rotor shaft 4, is arranged contact-free in the protection chamber 8 with respect to the protective housing 6 and/or with respect to the brush holder 7.

The protective housing 6 comprises a sleeve body 9 with at least one opening portion 10, wherein the opening portion 10 is at least partially arranged opposite the rotor shaft 4 with respect to a radial axis 11. The radial axis 11 is substantially oriented transversely and/or perpendicular to the longitudinal axis 5. In particular, the radial axis 11 may be oriented such that it penetrates the opening portion 10.

The sleeve body 9 is formed as a hollow cylindrical body, in particular as a substantially circular hollow cylindrical body. The sleeve body 9 forms at least partially inner wall surfaces which at least partially enclose the protection chamber 8 with respect to a not shown circumferential direction of the rotor shaft 4 around the longitudinal axis 5. The circumferential direction of the rotor shaft 4 extends in a plane which is substantially perpendicular and/or transverse to the longitudinal axis 5 and extends circumferentially around the longitudinal axis 5. The sleeve body 9 forms an axial opening 37 and an axial end plate 35 which are spaced apart from each other with respect to the longitudinal axis 5. The axial opening 37 is penetrated by the rotor shaft 4. The axial end plate 35 is completely closed. The axial end plate 35 forms at least partially an inner wall surface, in particular an axial inner wall surface, which at least partially enclose the protection chamber 8. The axial end plate 35 and the rotor shaft 4 are spaced apart from each other with respect to the longitudinal axis 5. The axial end plate 35 may be arranged opposite the rotor shaft 4 with respect to the longitudinal axis 5. The hollow cylindrical body, in particular the substantially circular hollow cylindrical body, of the sleeve body 9 and the axial end plate 35 of the sleeve body 9 are formed as a single-piece and/or as a one-piece.

The protective housing 6 comprises a counter sealing surface section 14. The opening portion 10 forms a guiding recess 19 for positioning the brush holder 7 with respect to the protective housing 6, wherein boundary walls of the guiding recess 19 are at least partially formed by the counter sealing surface section 14.

The guiding recess 19 comprises a cross-sectional area perpendicular to the radial axis 11 which increases with increasing distance to the rotor shaft 4 with respect to the radial axis 11. The guiding recess 19 may extend between a radial inner opening 38 of the opening portion 10 and a radial outer opening 39 of the opening portion 10, wherein the radial inner opening 38 is arranged more closely to the rotor shaft 4 than the radial outer opening 39 with respect to the radial axis 11. The cross-sectional area of the guiding recess 19 perpendicular to the radial axis 11 is minimal at the radial inner opening 38, wherein the cross-sectional area of the guiding recess 19 perpendicular to the radial axis 11 is maximal at the radial outer opening 39.

The counter sealing surface section 14 comprises four counter sealing surfaces 23a, 23b, 23c and 23d which are connected to each other with respect to the circumferential direction 16 of the opening portion 10. The circumferential direction 16 of the opening portion 10 is shown in Fig. 2 and extends in a plane which is substantially perpendicular and/or transverse to the radial axis 11 and extends circumferentially around the radial axis 1. The four counter sealing surfaces 23a, 23b, 23c and 23d each are inclined with respect to the radial axis 11. As shown in Fig. 2, the counter sealing surfaces 23a and 23c are spaced apart from each other with respect to the longitudinal axis 5, while the counter sealing surfaces 23b and 23d are spaced apart from each other with respect to a transverse axis 40 of the opening portion 10. The transverse axis 40 of the opening portion 10 is substantially oriented transversely and/or perpendicular to the longitudinal axis 5 of the rotor shaft. The transverse axis 40 of the opening portion 10 is substantially oriented transversely and/or perpendicular to the radial axis 11. The hollow cylindrical body, in particular the substantially circular hollow cylindrical body, of the sleeve body 9, the axial end plate 35 of the sleeve body 9 and the opening portion 10 are formed as a single-piece and/or as a one-piece.

As shown in Fig. 1 and Fig. 3, the protective housing 6 form a foot section 36. The foot section 36 encircles the axial opening 37 and/or the rotor shaft 4 collar-like. The foot section 36 is spaced apart from the axial end plate 35 with respect to the longitudinal axis 5. The foot section 36 may form at least one or more fastening struts 41.

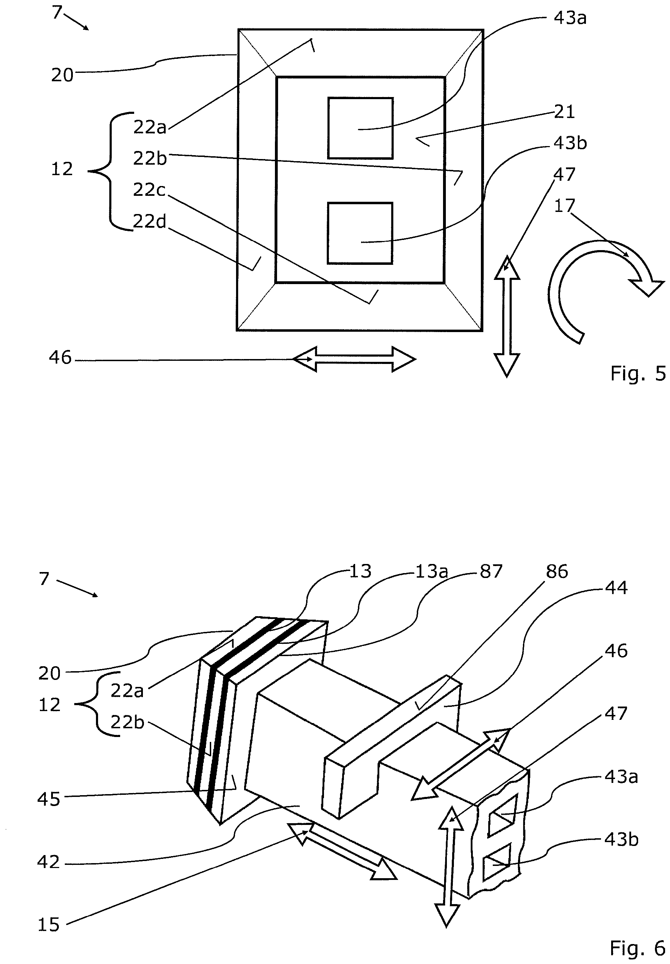

Fig. 4 show a perspectival view on a brush holder 7 with a brush holder head 20, brush holder body 42 and a spacer body 44 and Fig. 5 shows a front view on the brush holder head 42 of the brush holder of Fig. 4.

The brush holder 7 forms brush holder head 20, wherein boundary walls of the brush holder head 20 are at least partially formed by the sealing surface section 12, wherein the brush holder head 20 comprises a cross-sectional area perpendicular to the longitudinal axis of the brush holder and/or to the radial axis which increases with increasing distance to a front face with respect to the longitudinal axis 15of the brush holder 7 and/or to the radial axis 11, wherein the longitudinal axis 15 of the brush holder 7 is substantially oriented parallel to the radial axis 11 and/or substantially coincides with the radial axis 11, when the brush holder 7 is at least partially inserted in the opening portion 10 such that a fluid-tight sealing is formed.

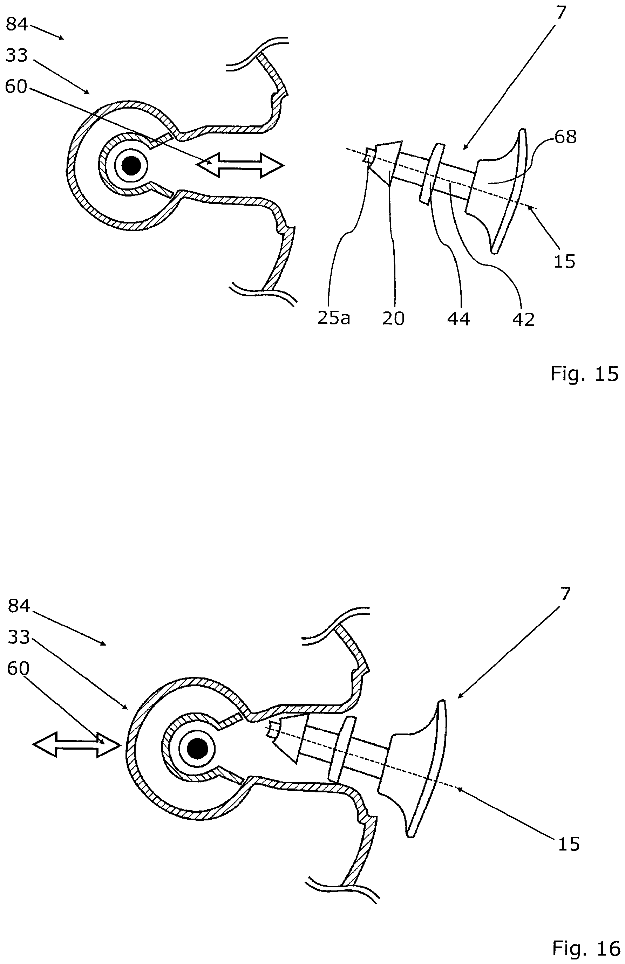

The cross-sectional area of the brush holder head perpendicular to the longitudinal axis 15 of the brush holder 7 increases with increasing distance to a front face 21 with respect to the longitudinal axis 15 of the brush holder 7. The cross-sectional area of the brush holder head 20 perpendicular to the longitudinal axis 15 of the brush holder 7 is minimal at the front face 21, while the cross-sectional area of the brush holder head 20 perpendicular to the longitudinal axis 15 of the brush holder 7 may be maximal at a rear face 45 of brush holder head. The front face 21 may be formed as curved surface and/or concave curved surface as shown in Fig. 15 to 18. The rear face 45 of the brush holder head 20 is spaced apart from the front face 21 with respect to the longitudinal axis 15 of the brush holder 7.

The brush holder 7 forms a brush holder body 42 which is connected to the rear face 45 of the brush holder head 20. The brush holder body 42 has a cross-sectional area perpendicular to the longitudinal axis 15 of the brush holder 7 and/or to the radial 11 axis which is substantially constant along the longitudinal axis 15 of the brush holder 7. The brush holder body 7 has a cross-sectional area perpendicular to the longitudinal axis 15 of the brush holder 7 which is smaller than the cross-sectional area perpendicular to the longitudinal axis 15 of the rear face 45 of the brush holder head 20. A first brush guidance recess 43a and a second brush guidance recess 43b each may extend through the brush holder body 42 and through the brush holder head 20. The first brush guidance recess 43a and the second brush guidance recess 43b extend along the longitudinal axis 15 of the brush holder 7. The first brush guidance recess 43a and the second brush guidance recess 43b are spaced apart from each other with respect to a height axis 47 of the brush holder 7. The brush holder body 42 and the brush holder head 20 may be formed as a single-piece and/or one-piece.

The brush holder 7 has a spacer body 44. The spacer body 44 of the brush holder 7 is spaced apart from the brush holder head 20, in particular from the rear face 45 of brush holder head 20, with respect to the longitudinal axis 15 of the brush holder 7. The spacer body 44 of the brush holder 7 and the brush holder head 20 are connected and/or interconnected by the brush holder body 42. The spacer body has a length extension with respect to the longitudinal axis 15 of the brush holder 7 which is shorter than a length extension of the brush holder body 42 with respect to the longitudinal axis 15 of the brush holder 7. The spacer body has a length extension with respect to a height axis 47 of the brush holder 7 which is shorter than a length extension of the brush holder body 42 with respect to the height axis 47 of the brush holder 7. The height axis 47 of the brush holder 7 is substantially oriented transversely and/or perpendicular to the longitudinal axis 15 of the brush holder 7. When the brush holder 7 is at least partially inserted in the opening portion 10 such that a fluid-tight sealing is formed, the height axis 47 of the brush holder 7 may be substantially oriented parallel to the longitudinal axis 5 of the rotor shaft 4.

The spacer body 44 has a length extension with respect to a transverse axis 46 of the brush holder 7 which is greater than a length extension of the brush holder body 42 with respect to the transvers axis 46 of the brush holder 7. The transvers axis 46 of the brush holder 7 is substantially oriented transversely and/or perpendicular to the longitudinal axis 15 of the brush holder 7. The transvers axis 46 of the brush holder 7 is substantially oriented transversely and/or perpendicular to the height axis 47 of the brush holder 7. When the brush holder 7 is at least partially inserted in the opening portion 10 such that a fluid-tight sealing is formed, the transvers axis 46 of the brush holder 7 may be substantially oriented parallel to the transvers axis 40 of the opening portion 10.

The spacer body 44 is formed at least partially on a surface of the brush holder body 42 which may have the shortest distance to sliding surface 85 of the protection cover 33 with respect to the axial axis 58 of the protection cover 33 and/or with respect to the height axis 47 of the brush holder 7. The spacer body may have a cross-sectional area perpendicular to the longitudinal axis of the brush holder which is substantially constant along the longitudinal axis of the brush holder.

The spacer body 44, the brush holder head 20 and the brush holder body 42 may be may be formed as a single-piece and/or as a one-piece.

The sealing surface section 12 is formed completely circumferentially with respect to a circumferential direction 17 of the brush holder 7, wherein the circumferential direction 17 of the brush holder 7 substantially coincides with the circumferential direction 16 of the opening portion 10, when the brush holder 7 is at least partially inserted in the opening portion 10 such that a fluid-tight sealing is formed. The circumferential direction 17 of the brush holder 7 extends in a plane which is substantially perpendicular and/or transverse to the longitudinal axis 15 of the brush holder 7 and extends circumferentially around the longitudinal axis 15 of the brush holder 7.

The sealing surface section 12 comprises four sealing surfaces 22a, 22b, 22c and 22d which are connected to each other with respect to the circumferential direction 17 of the brush holder 7. The four sealing surfaces 22a, 22b, 22c and 22d each are inclined with respect to the longitudinal axis 15 of the brush holder. As shown in Fig. 5, the sealing surfaces 22a and 22c are spaced apart from each other with respect to the height axis 47, while the sealing surfaces 22b and 22d are spaced apart from each other with respect to a transverse axis 46 of the brush holder 7.

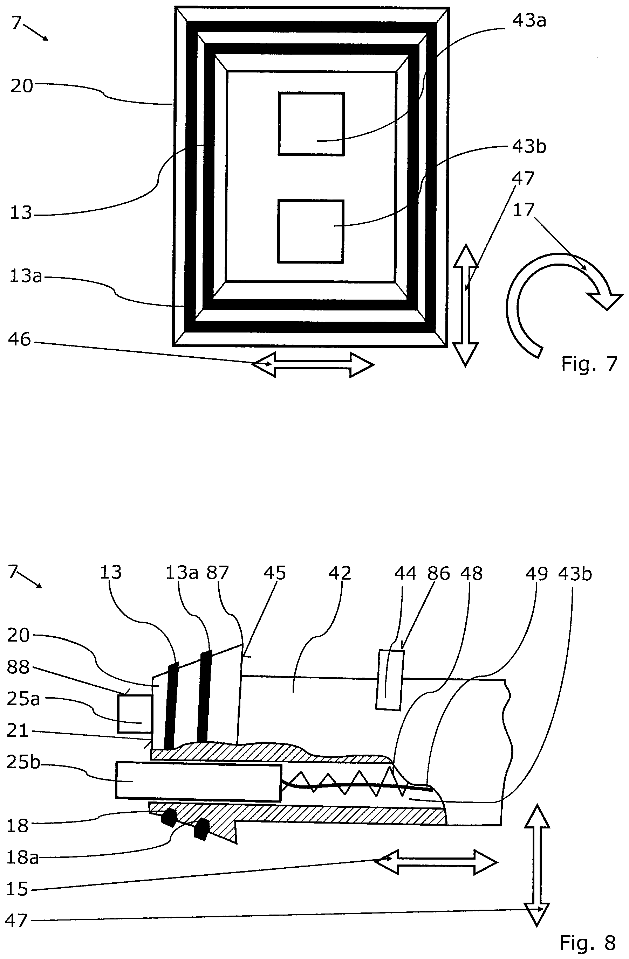

Fig. 6 shows a perspective view on a brush holder 7 with a brush holder head 20, brush holder body 42 and a spacer body 44, wherein the brush holder head comprises at least one sealing member 13. Fig. 7 shows a front view on the brush holder head 20 of the brush holder 7 of Fig. 6. Fig. 8 shows a side view and a partial cross-section of the brush holder 7 of Fig. 6 and 7.

The at least one sealing member 13 is connected to the sealing surface section 12 of the brush holder 7 in a materially bonded manner. The at least one sealing member 13 is formed completely circumferentially with respect to the circumferential direction 17 of the brush holder 7.

In a front view on sealing surface section 12 of the brush holder 7 as shown in Fig. 7, the at least one sealing member 13 forms a closed ring-like shape which runs and/or extends continuously along the sealing surface section 12, in particular along all sealing surfaces 22a, 22b, 22c and 22d of the sealing surface section 12.

The sealing surface section 12 of the brush holder 7 may comprise at least one groove 18, in particular at least one groove 18 which is formed completely circumferentially with respect to the circumferential direction 17 of the brush holder 7, wherein at least one sealing member 13 may be at least partially connected, in particular intermaterial-free connected, to the at least one groove 18 in a materially bonded manner.

The brush holder 7 may comprise at least two separate sealing members 13, 13a, wherein the at least two sealing members 13, 13a are spaced apart from each other with respect to a longitudinal axis 15 of the brush holder 7. The at least two separate sealing members 13, 13a may be of the similar type.

A first sealing member 13 may be at least partially connected, in particular intermaterial-free connected, to the at least one groove 18 in a materially bonded manner. A second sealing member 13a may be at least partially connected, in particular intermaterial-free connected, to the at least one groove 18a in a materially bonded manner

As shown in Fig. 8, the brush holder 7 may comprise a first brush 25a and a second brush 25b. The brushes 25a and 25b may be formed separate with respect to the brush holder 7. The first brush 25a is at least partially arranged in the first brush guidance recess 43a wherein the first brush 25a is movable with respect to the longitudinal axis 15 of the brush holder 7. The second brush 25b is at least partially arranged in the second brush guidance recess 43b wherein the second brush 25 b is movable with respect to the longitudinal axis 15 of the brush holder 7. The first brush 25a and the second brush 25b are spaced apart from each other with respect to the height axis 47 of the brush holder 7.

The first brush guidance recess 43a and the second brush guidance recess 43b each may ends in an opening of the front face 21 of the brush holder head 20.

The first brush 25a and the second brush 25b may extend through these opening of the front face 21 of the brush holder head 7.

The brush holder head 20 forms a sliding edge 87 for sliding on the sliding surface 85 of a protection cover 33 and the spacer body forms sliding surface 86 for sliding on the sliding surface 85 of the protection cover 33.

Each brush 25a and/or 24a may be fixed to a brush spring 48 which may be arranged in the respective brush guidance recess 43a and/or 43b. Each brush 25a and/or 24a may be fixed to an electrical connection line 49 which may be arranged in the respective brush guidance recess 43a and/or 43b.

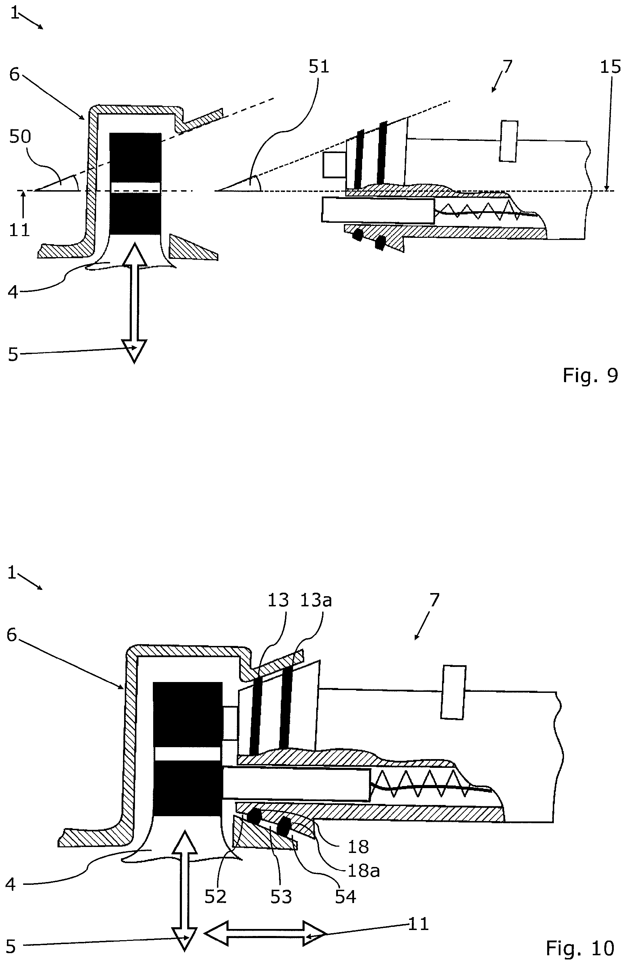

Fig. 9 shows a side view of an assembly 1 for a rotating electric machine 2 with a protective housing 6, rotor shaft 4 and a brush holder 7 before an assembling process.

The four sealing surfaces 22a, 22b, 22c and 22d each are inclined with respect to the longitudinal axis 15 of the brush holder 7. The four counter sealing surfaces 23a, 23b, 23c and 23d each inclined with respect to the radial axis 11.

All four sealing surfaces 22a, 22b, 22c and 22d are inclined with respect to the longitudinal axis 15 by a substantially identical inclination angle 51. The inclination 51 angle may be in the range of 90° to 20°, in particular in the range of 50° to 30°. In particular, the inclination angle may be substantially 45°.

All four counter sealing surfaces 23a, 23b, 23c and 23d are inclined with respect to the radial axis 11 by a substantially identical inclination angle 50. The inclination angle 51 may be in the range of 90° to 20°, in particular in the range of 50° to 30°. In particular, the inclination angle may be substantially 45°.

The inclination angle 50 of the counter sealing surfaces 23a, 23b, 23c and 23d with respect to the radial axis 11 is substantially identical to the inclination angle 51 of the sealing surfaces 22a, 22b, 22c and 22d with respect to the longitudinal axis 15 of the brush holder 7.

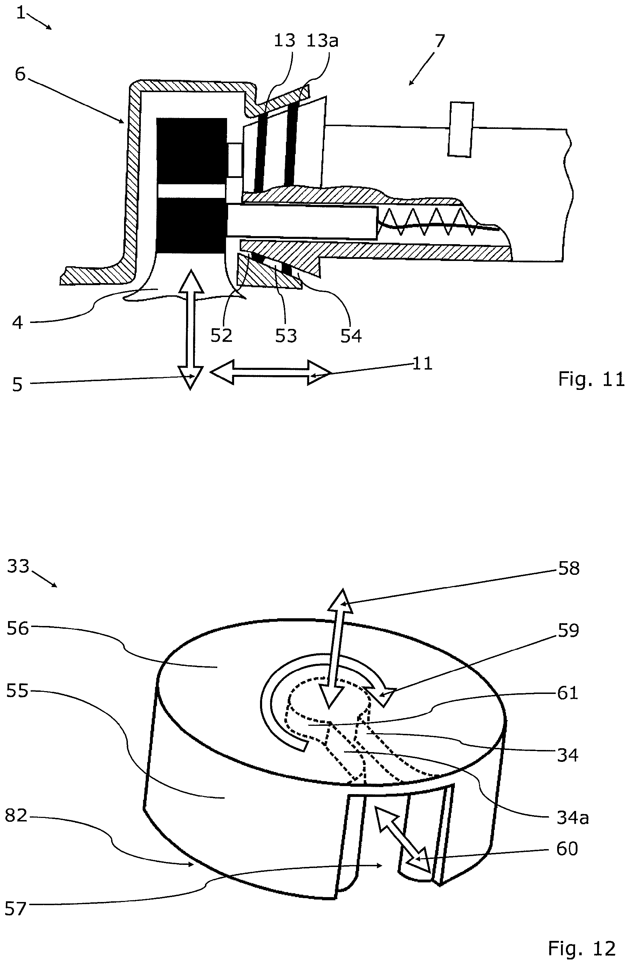

Fig. 10 and Fig. 11 show the assembly 1 after an assembly process, when the brush holder 7 is at least partially inserted in the opening portion 10 such that a fluid-tight, in particular an air-tight and/or a water-tight and/or for a liquid-tight sealing, sealing is formed. In Fig. 11 the sealing members 13 and 13a are arranged on the sealing surface section 12 without grooves. In Fig. 10 the sealing members 13 and 13a are arranged are at least partially arranged in grooves 13, 13a of the brush holder 7.

The counter sealing surface section 14 is at least partially arranged opposite sealing surface section 12 of the brush holder 7 with respect to the radial axis 11, wherein the at least one sealing member 13 is arranged between the sealing surface section 12 and the counter sealing surface section 14 with respect to the radial axis 11 for a fluid-tight sealing. The at least one sealing member 13 of the brush holder 7 is contacting the counter sealing surface section 14 of the protective housing 6, wherein the at least one sealing member 13 is connected to the sealing surface section 12 of the brush holder 7 in a materially bonded manner.

At least one sealing member 13 and 13a forms a fluid-tight sealing, in particular for an air-tight and/or for a water-tight and/or for a liquid-tight sealing, of a gap between the sealing surface section 12 and the counter sealing surface section 14 such that a fluid, in particular air, water and/or liquid, cannot flow from the protection chamber 8 to an environment of the assembly along the gap between the sealing surface section 12 and the counter sealing surface section 14 or vice versa. In Fig. 10 and Fig. 11 the two sealing members 13 and 13a form a double sealing of the gap between the sealing surface section 12 and the counter sealing surface section 14. The sealing members13 seals a radial inner gap space 52 against radial middle gap space 53. The radial inner gap space 52 is fluidically connected to the protection chamber 8. The sealing members13 seals a radial middle gap space 53 against radial outer gap space 54. The radial outer gap space 54 is fluidically connected to the environment of the assembly 1.

A first slip ring 24a and a second slip ring 24b are fixed to the rotor shaft 4, wherein the first slip ring 24a and the second slip ring 24b are arranged in the protection chamber 8, wherein the brush holder 7 comprises a first brush 25a and a second brush 25b, wherein the brush holder 7 is at least partially inserted in the opening portion 10 such that the first brush 25a contacts the first slip ring 24a and the second brush 25b contacts the second slip ring 24b.

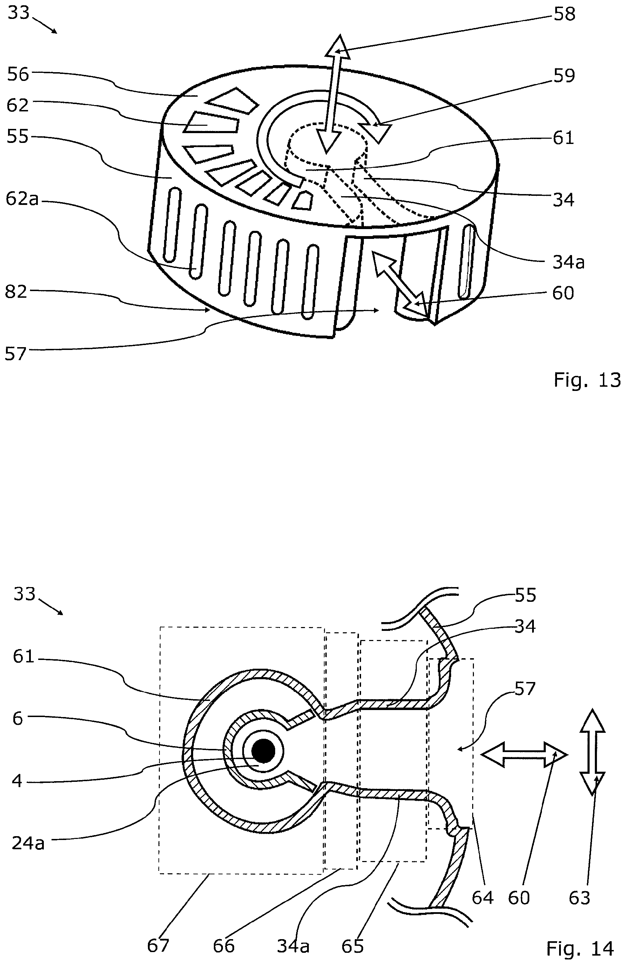

Fig. 12 and Fig.13 show a perspective view on a protection cover 33.The protection cover 33 has a shell body 55 and an axial end plate 56 which at least partially form a shield chamber 83. The shell body 55 forms a machine end face 82 for arranging the protection cover 33 on the rotating electric machine 2, wherein the axial end plate 56 is arranged at a distance from the machine end face 82 with respect to an axial axis 58 of the protection cover 33. The shell body 55 comprises at least one insertion opening 57 for inserting the brush holder 7 at least partially in the shield chamber 83 along an insertion axis 60 of the protection cover 33. The insertion axis 60 of the protection cover 33 is substantially oriented transversely and/or perpendicular to the axial axis 58 of the protection cover 33. At least two guiding ribs 34, 34a are arranged in the shield chamber 83 for a guiding of the brush holder 7 along the insertion axis 60, wherein the at least two guiding ribs 34, 34a are at least partially arranged on the axial end plate 56. The at least two guiding ribs 34, 34a are at least partially spaced apart from each other with respect to a transverse axis 63 of the protection cover 33, wherein the transverse axis 63 of the protection cover 33 is substantially oriented transversely and/or perpendicular to the axial axis 58 of the protection cover 33. The transverse axis 63 of the protection cover 33 is substantially oriented transversely and/or perpendicular to the insertion axis 60 of the protection cover 33. The spacing between the at least two guiding ribs 34, 34a with respect to the transverse axis 63 of the protection cover 33 varies at least in sections along the insertion axis 60 of the protection cover 33.

The shell body 55 may form at least partially inner wall surfaces which at least partially enclose shield chamber 83 with respect to a circumferential direction 59 of the protection cover 33 around the axial axis 58. The circumferential direction 59 of the protection cover 33 extends in a plane which is substantially perpendicular and/or transverse to the axial axis 59 and extends circumferentially around the axial axis 59.

Compared to Fig. 12, the protection cover 33 shown in Fig. 13 comprises ventilation slits 62 which are formed by the axial end plate 56 of the protection cover 33. Compared to Fig. 12, the protection cover 33 shown in Fig. 13 comprises ventilation slits 62a which are formed by shell body 55 of the protection cover 33.

As shown in Fig. 14, the at least one insertion opening 57 is followed by a first section 64 of guiding ribs 34, 34a with respect to the insertion axis 60 of the protection cover 33, wherein the spacing between the at least two guiding ribs 34, 34a with respect to the transverse axis 63 of the protection cover 33 decreases nonlinearly in the first section 64 along the insertion axis 60 of the protection cover 33 with increasing distance from the insertion opening 57.

The first section 64 of guiding ribs 34, 34a is followed by a second section 65 of guiding ribs 34, 34a with respect to the insertion axis 60 of the protection cover 33, wherein the spacing between the at least two guiding ribs 34, 34a with respect to the transverse axis 63 of the protection cover 33 is constant in the second section 65 along the insertion axis 60 of the protection cover 33,

The second section 65 of guiding ribs 34, 34a is followed by a third section 66 of guiding ribs 34, 34a with respect to the insertion axis 60 of the protection cover 33, wherein the spacing between the at least two guiding ribs 34, 34a with respect to the transverse axis 63 of the protection cover 33 decreases nonlinearly and/or linearly in the third section 66 along the insertion axis 60 of the protection cover 33 with increasing distance from the insertion opening 57.

The third section 66 of guiding ribs 34, 34a is followed by a fourth section 67 of guiding ribs 34, 34a with respect to the insertion axis 60 of the protection cover 33, wherein the fourth section 67 forms a receiving sleeve 61 connecting the at least two guiding ribs 34, 34a with each other.

The receiving sleeve 61 may be formed as a hollow cylindrical body, in particular as a substantially circular hollow cylindrical body. A protective housing 6 and/or a rotor shaft 4 may be at partially arranged in the receiving sleeve 61. An opening portion 10 of the protective housing 6 may be at least partially arranged opposite the insertion opening 57 with respect to the insertion axis 60.

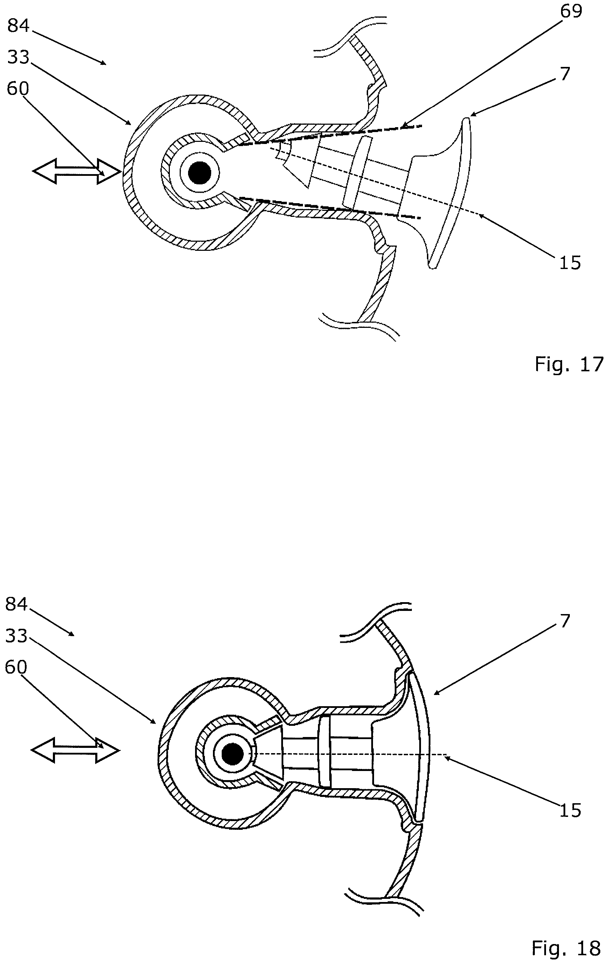

Fig. 15 shows a top view of a protection cover assembly 84 for a rotating electric machine 2 before an assembling process. Fig. 16 shows a top view of a protection cover assembly 84 for a rotating electric machine 2 during an assembling process. Fig. 17 shows a top view of a protection cover assembly 84 for a rotating electric machine 2 during an assembling process. Fig. 18 shows a top view of a protection cover assembly 84 for a rotating electric machine 2 after an assembling process.

The at least two guiding ribs 34, 34a guide the brush holder 7 with at least one brush 25a during the insertion by directing the brush holder 7 along the insertion axis 60, in particular along the dashed lines 69 show in fig. 17, so that the brush holder 7 with at least one brush 25a can be pressed along the insertion axis 60 until the brush holder's final position, which is shown in Fig. 18. In this position, a front face of the at least one brush 25a of the brush holder 7 contacts at least one slip ring 24a. The brush 25a may be pressed into a brush guidance recess 43a of the brush holder 7, wherein a brush spring 48 in the brush guidance recess 43a may be provide a sufficient contacting force for contacting of the brush 25a and the slip ring 24a.

The first section 64 may form a receiving section into which an end body 68 of the brush holder 7 may be arranged. The first section 64 may be at least partially formed complementary to a portion of the end body 68 of the brush holder 7.

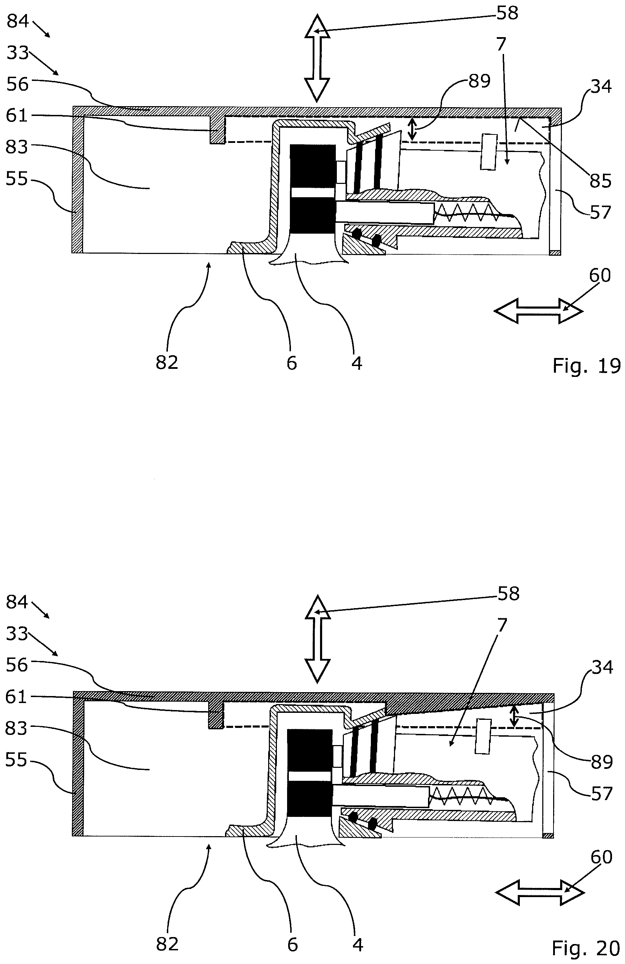

Fig. 19 shows a side view of a protection cover assembly 84 for a rotating electric machine 2 after an assembling process with a sliding surface 85 formed by the protection cover forming a sliding surface which is at least partially enclosed by the at least two guiding ribs 34, 34a with respect to a circumferential direction 59 of the protection cover 33.

The at least two guiding ribs 34, 34a have an extension length 89 from a sliding surface 85 of the protection cover 33 with respect to the axial axis 58 of the protection cover 33 which is shorter than the distance between the sliding surface 85 and the machine end side 82 of the protection cover 33 with respect to the axial axis 58 of the protection cover 33.

As shown in Fig. 20, the extension length 89 of the at least two guiding ribs 34, 34a may decrease in sections along the insertion axis 60 of the protection cover 33 with increasing distance from the insertion opening 57.

The at least two guiding ribs 34, 34a may have an extension length 89 from a sliding surface 85 of the protection cover 33 with respect to the axial axis 58 of the protection cover 33 which is equal or shorter than the distance between the sliding surface 86 of the spacer body 44 and a brush surface 88, which is shown in Fig. 8, with respect to a height axis 47 of the brush holder7. The at least two guiding ribs 34, 34a may have an extension length 89 from a sliding surface 85 of the protection cover 33 with respect to the axial axis 58 of the protection cover 33 which is equal or shorter than the distance between the sliding edge 87 of the brush holder head 20 and the brush surface 88 with respect to the height axis 47 of the brush holder 7.

The brush surface 88 may be a surface of at least one brush 25 of the brush holder 7, which may have the shortest distance to sliding surface 85 of the protection cover 33 with respect to the axial axis 58 of the protection cover 33 and/or with respect to the height axis 47 of the brush holder 7.

Fig. 21 shows a schematic view of a rotating electric machine 2 and Fig. 22 shows a schematic view of a rotating electric machine 2 in a motor vehicle 3.

The rotating electric machine 2, in particular an alternator for a motor vehicle 3, forms an assembly 1 and a protection cover assembly 84. The rotating electric machine 2 has a machine housing 26 comprising a front bracket 27 and a rear bracket 28, wherein the housing 26, in particular the front bracket 27 and the rear bracket 28, forms an installation chamber 29. A stator unit 30 and a rotor unit 31 are arranged in the installation chamber 29, wherein the stator unit 30 is at least partially arranged on the machine housing 26, in particular on the front bracket 27 and/or on the rear bracket 28. The rotor unit 31 is fixed to the rotor shaft 4 in a rotationally fixed manner. The rotor shaft 4 is rotatably supported about a rotation axis 32. The assembly 1 and the protection cover assembly 84 are arranged outside of the installation chamber 29.

The assembly 1 is at least partially covered by a protection cover 33, wherein the assembly 1 is arranged between the rear bracket 28 and the protection cover 33 with respect to the rotation axis 32 and/or longitudinal axis 5 of the rotor shaft 4.

The stator unit 30 may comprise a stator body 77 and stator windings 78. The rotor unit 31 may have rotor windings 81. The rotor unit may comprise a front claw body 79 and a rear claw body 80 which are mounted on the rotor shaft 4 on both sides of the rotor windings 81, in such a way that pole claws of the front claw body 79 and pole claws of the rear claw body 80 alternate in the circumferential direction about the longitudinal axis 5 of the rotor shaft 4 and thus form electromagnetic poles which alternate with one another during the operation of the alternator.

The rotor shaft 4 may be rotatably mounted in a front bearing 72 and in a rear 73 bearing. The front bearing 72 may be arranged to the front bracket 27, while the rear bearing 73 may be arranged to the rear bracket 28. The rear bearing 73 and/or the front bearing 72 may be formed fluid-tight, in particular air-tight and/or water-tight and/ liquid-tight. The rear bearing 73 and/or the front bearing 72 may be as rolling bearings, in particular as rolling bearings with a sealing disc.

A part of the rotor shaft 4 which may be led out through the front bracket 27 may define a front end part 70 of the rotor shaft 4 which is outside of the installation chamber 29. A part of the rotor shaft which may be led out through the rear bracket 28 may define a rear end part 71 of the rotor shaft 4 which is outside of the installation chamber 29.

The rotating electric machine 2 may comprise a rectifier unit 75 and/or a voltage regulator unit 74. The front bracket 27 and the rear bracket 28 may form connections bores through which fastening means can be pushed in order to fix the front bracket 27 to the rear bracket 28.

The edges between two adjacent sealing surfaces 22a, 22b, 22c, 22d may be rounded. Due to this, sharp edges and/or sharp corners may be avoided. The rounded edges between two adjacent sealing surfaces 22a, 22b, 22c, 22d may have a small radius.

The edges between two adjacent counter sealing surfaces 23a, 23b, 23c, 23d may be rounded. Due to this, sharp edges and/or sharp corners may be avoided. The rounded edges between two adjacent counter sealing surfaces 23a, 23b, 23c, 23d may have a small radius.

Edges and/or corner sections of the brush holder head 20 may be rounded. Due to this, sharp edges and/or sharp corners may be avoided.

Edges and/or corner sections of the spacer body 44 may be rounded. Due to this, sharp edges and/or sharp corners may be avoided.

Sharp edges and/or sharp corner sections shown in the figures may be rounded. All sharp edges and/or sharp corner sections shown in the figures may be rounded.

## Claims

1. Assembly (1) for a rotating electric machine (2), in particular for an alternator for a motor vehicle (3), comprising:
- a rotor shaft (4) with a longitudinal axis (5),
- a protective housing (6) and a brush holder (7) which at least partially form a protection chamber (8),
- wherein the protective housing (6) is formed separately with respect to the brush holder (7),
- wherein the rotor shaft (4) is at least partially arranged in the protection chamber (8),
- wherein protective housing (6) comprises a sleeve body (9) with at least one opening portion (10),
- wherein the opening portion (10) is at least partially arranged opposite the rotor shaft (4) with respect to a radial axis (11),
- wherein the radial axis (11) is substantially oriented transversely and/or perpendicular to the longitudinal axis (5),
- wherein the brush holder (7) is at least partially inserted in the opening portion (10),
- wherein brush holder (7) comprises a sealing surface section (12) and at least one sealing member (13),
- wherein the protective housing (6) comprises a counter sealing surface section (14) which is at least partially arranged opposite sealing surface section (12) of the brush holder (7) with respect to the radial axis (11),
- wherein the at least one sealing member (13) is arranged between the sealing surface section (12) and the counter sealing surface section (14) with respect to the radial axis (11) for a fluid-tight sealing,
- wherein the at least one sealing member (13) of the brush holder (7) is contacting the counter sealing surface section (14) of the protective housing (6), and
- wherein the at least one sealing member (13) is connected to the sealing surface section (12) of the brush holder (7) in a materially bonded manner.

2. Assembly (1) according to claim 1,
**characterized in**
- **that** the brush holder (7) comprises at least two separate sealing members (13, 13a),
- **that** the at least two sealing members (13, 13a) are arranged between the sealing surface section (12) and the counter sealing surface section (14) for a fluid-tight sealing,
- **that** the at least two sealing members (13, 13a) are spaced apart from each other with respect to a longitudinal axis (15) of the brush holder (7),
- **that** the longitudinal axis (15) of the brush holder (7) is substantially oriented parallel to the radial axis (11) and/or substantially coincides with the radial axis (11), when the brush holder (7) is at least partially inserted in the opening portion (10) such that a fluid-tight sealing is formed,
- **that** the at least two sealing members (13, 13a) of the brush holder (7) are contacting the counter sealing surface section (14) of the protective housing (6), and
- **that** the at least two sealing members (13, 13a) are connected to the sealing surface section (12) of the brush holder (7) in a materially bonded manner.

3. Assembly (1) according to claim 1 or 2,
**characterized in**
- **that** the counter sealing surface section (14) is formed completely circumferentially with respect to a circumferential direction (16) of the opening portion (10),
- **that** the sealing surface section (12) is formed completely circumferentially with respect to a circumferential direction (17) of the brush holder (7),
- **that** the circumferential direction (17) of the brush holder (7) substantially coincides with the circumferential direction (16) of the opening portion (10), when the brush holder (7) is at least partially inserted in the opening portion (10) such that a fluid-tight sealing is formed, and
- **that** at least one sealing member (13) is formed completely circumferentially with respect to the circumferential direction (17) of the brush holder (7).

4. Assembly (1) according to any one of the preceding claims,
**characterized in**
- **that** at least one sealing member (13) is intermaterial-free connected to the sealing surface section (12) of the brush holder (7) in a materially bonded manner, and/or
- **that** at least one sealing member (13) is connected to the sealing surface section (12) of the brush holder (7) in a materially bonded and form-fitting manner, and/or
- **that** at least one sealing member (13) is intermaterial-free connected to the sealing surface section (12) of the brush holder (7) in a materially bonded and form-fitting manner.

5. Assembly (1) according to any one of the preceding claims,
**characterized in**
- **that** the sealing surface section (12) of the brush holder (7) comprises at least one groove (18), in particular at least one groove (18) which is formed completely circumferentially with respect to the circumferential direction (17) of the brush holder (7),
- **that** at least one sealing member (13) is at least partially connected, in particular intermaterial-free connected, to the at least one groove (18) in a materially bonded manner.

6. Assembly (1) according to any one of the preceding claims,
**characterized in**
- **that** the opening portion (10) forms a guiding recess (19) for positioning the brush holder (7) with respect to the protective housing (6),
- **that** boundary walls of the guiding recess (19) are at least partially formed by the counter sealing surface section (14),
- **that** the guiding recess (19) comprises a cross-sectional area perpendicular to the radial axis (11) which increases with increasing distance to the rotor shaft (4) with respect to the radial axis (11),
- **that** the brush holder (7) forms brush holder head (20),
- wherein boundary walls of the brush holder head (20) are at least partially formed by the sealing surface section (12),
- **that** the brush holder head (20) comprises a cross-sectional area perpendicular to the longitudinal axis (15) of the brush holder (7) and/or to the radial axis (11) which increases with increasing distance to a front face (21) with respect to the longitudinal axis (15) of the brush holder (7) and/or to the radial axis (11), and
- **that** the front face (21) is at least partially arranged opposite the rotor shaft (4) with respect to the radial axis (11).

7. Assembly (1) according to any one of the preceding claims,
**characterized in**
- **that** the sealing surface section (12) comprises at least four sealing surfaces (22a, 22b, 22c, 22d), which are connected to each other with respect to the circumferential direction (17) of the brush holder (7),
- **that** the counter sealing surface section (14) comprises at least four counter sealing surfaces (23a, 23b, 23c, 23d), which are connected to each other with respect to the circumferential direction (16) of the opening portion (10).

8. Assembly (1) according to claim 7,
**characterized in**
- **that** the four sealing surfaces (22a, 22b, 22c, 22d) each are perpendicular and/or inclined with respect to the longitudinal axis (15) of the brush holder (7),
- **that** the four counter sealing surfaces (23a, 23b, 23c, 23d) each are perpendicular and/or inclined with respect to the radial axis (11).

9. Assembly (1) according to any one of the preceding claims,
**characterized in**
- **that** the protective housing (6) and/or the brush holder (7) and/or at least one sealing member (13) is formed from an insulating material, and/or
- **that** at least one sealing member (13) and the brush holder (7) are formed from different materials, and/or
- **that** at least one sealing member (13) is formed from a more elastic material than the brush holder (7) and/or than the protective housing (6).

10. Assembly (1) according to any one of the preceding claims,
**characterized in**
- **that** the protective housing (6) and/or the brush holder (7) and/or at least one sealing member (13) is formed as an injection-moulded part, and/or
- **that** the brush holder (7) and at least one sealing member (13) are formed as a multi-material injection-moulded part.

11. Assembly (1) according to any one of the preceding claims,
**characterized in**
- **that** a first slip ring (24a) and a second slip ring (24b) are fixed to the rotor shaft (4),
- **that** the first slip ring (24a) and the second slip ring (24b) are arranged in the protection chamber (8),
- **that** the brush holder (7) comprises a first brush (25a) and a second brush (25b),
- **that** the brush holder (7) is at least partially inserted in the opening portion (10) such that the first brush (25a) contacts the first slip ring (24a) and the second brush (25b) contacts the second slip ring (24b).

12. Brush holder (7) for an assembly (1) according to any one of the preceding claims, comprising:
- a sealing surface section (12) and at least one sealing member (13),
- wherein the at least one sealing member (13) is connected to the sealing surface section (12) of the brush holder (7) in a materially bonded manner,
- wherein the brush holder (7) is formed separately with respect to a protective housing (6) of the assembly (1),
- wherein the brush holder (7) is at least partially insertable in an opening portion (10) of the protective housing (6) of the assembly (1) to form at least partially a protection chamber (8) of the assembly (1),
- wherein the at least one sealing member (13) is arrangeable between the sealing surface section (12) and a counter sealing surface section (14) of the protective housing (6) of the assembly (1) to form a fluid-tight sealing.

13. Protective housing (6) for an assembly (1) according to any one of the claims 1 to 11, comprising:
- a sleeve body (9) with at least one opening portion (10),
- wherein the sleeve body (9) forms at least partially a protection chamber (8) of the assembly (1),
- wherein a rotor shaft (4) of the assembly (1) with a longitudinal axis (5) is at least partially arrangeable in the protection chamber (8),
- wherein the opening portion (10) is at least partially arrangeable opposite a rotor shaft (4) of the assembly (1) with respect to a radial axis (11),
- wherein the protective housing (6) is formed separately with respect to a brush holder (7) of the assembly (1),
- wherein the brush holder (7) of the assembly (1) is at least partially insertable in the opening portion (10) such that at least one sealing member (13) of the brush holder (7) contacts a counter sealing surface section (14) of the protective housing (6) to form a fluid-tight sealing.

14. Rotating electric machine (2), in particular an alternator for a motor vehicle (3), comprising:
- an assembly (1) according to any one of the claims 1 to 11,
- a machine housing (26) comprising a front bracket (27) and a rear bracket (28),
- wherein the housing (26), in particular the front bracket (27) and the rear bracket (28), forms an installation chamber (29),
- wherein a stator unit (30) and a rotor unit (31) are arranged in the installation chamber (29),
- wherein the stator unit (30) is at least partially arranged on the machine housing (26), in particular on the front bracket (27) and/or on the rear bracket (28),
- wherein the rotor unit (31) is fixed to the rotor shaft (4) of the assembly (1) in a rotationally fixed manner,
- wherein the rotor shaft (4) is rotatably supported about a rotation axis (32),
- wherein the assembly (1) is arranged outside of the installation chamber (29).

15. Rotating electric machine (2) according to claim 14,
**characterized in**
- **that** the assembly (1) is at least partially covered by a protection cover (33),
- wherein the assembly (1) is arranged between the rear bracket (28) and the protection cover (33) with respect to the rotation axis (32) and/or longitudinal axis (5) of the rotor shaft (4),
- wherein the protection cover (33) comprises a shell body (55) and an axial end plate (56) which at least partially form a shield chamber (83),
- wherein the shell body (55) forms a machine end face (82) for arranging the protection cover (33) on the rotating electric machine (2),
- wherein the axial end plate (56) is arranged at a distance from the machine end face (82) with respect to an axial axis (58) of the protection cover (33),
- wherein the shell body (55) comprises at least one insertion opening (57) for inserting the brush holder (7) at least partially in the shield chamber (83) along an insertion axis (60) of the protection cover (33),
- wherein the insertion axis (60) of the protection cover (33) is substantially oriented transversely and/or perpendicular to the axial axis (58) of the protection cover (33),
- wherein at least two guiding ribs (34, 34a) are arranged in the shield chamber (83) for a guiding of the brush holder (7) along the insertion axis (60),
- wherein the at least two guiding ribs (34, 34a) are at least partially arranged on the axial end plate (56),
- wherein the at least two guiding ribs (34, 34a) are at least partially spaced apart from each other with respect to a transverse axis (63) of the protection cover (33),
- wherein the transverse axis (63) of the protection cover (33) is substantially oriented transversely and/or perpendicular to the axial axis (58) of the protection cover (33),
- wherein the transverse axis (63) of the protection cover (33) is substantially oriented transversely and/or perpendicular to the insertion axis (60) of the protection cover (33),
- wherein the spacing between the at least two guiding ribs (34, 34a) with respect to the transverse axis (63) of the protection cover (33) varies at least in sections along the insertion axis (60) of the protection cover (33).
